# EUROPEAN PATENT APPLICATION

(11) **EP 4 503 328 A1**
(43) Date of publication of application: **05.02.2025**
(21) Application number: 23778195.0
(22) Date of filing: 28.03.2023
(51) Int. Cl.: H01M 50/627, H01M 50/10

(54) **BATTERY HOUSING, CELL, AND HIGH-CAPACITY BATTERY**

(30) Priority: 30.03.2022 CN 202210332919; 30.03.2022 CN 202220729102 U; 19.04.2022 CN 202210409227; 19.04.2022 CN 202210437326; 30.08.2022 CN 202211050980; 13.09.2022 CN 202222417523 U; 13.09.2022 CN 202222418326 U; 23.11.2022 CN 202211470354; 13.01.2023 CN 202320080629 U
(71) Applicant: D-Aus Energy Storage Technology (Xi'an) Co., Ltd, Xi' An, Shaanxi 710075 (CN)
(72) Inventor: ZHENG, Gaofeng, Xi'an, Shaanxi 710075 (CN); LIU, Yi, Xi'an, Shaanxi 710075 (CN); LEI, Zhengjun, Xi'an, Shaanxi 710075 (CN); BAI, Xiaofeng, Xi'an, Shaanxi 710075 (CN); LI, Chao, Xi'an, Shaanxi 710075 (CN); LI, Kun, Xi'an, Shaanxi 710075 (CN)
(74) Representative: Studio Torta S.p.A.
(86) International application number: PCT/CN2023/084370
(87) International publication number: WO 2023/185830

(57) **Abstract**

The invention provides a cell housing, a cell, and a high-capacity battery. The cell housing has a soluble mechanism, and an inner cavity of the cell housing is in communication with an exterior after the soluble mechanism is in contact with an electrolyte. The cell housing has a simple housing structure, such that electrolyte cavities of cells can be in communication without mechanical operation, a plurality of cells are in a uniform electrolyte system, and a performance of the battery is improved.

## Description

### Technical Field

The invention relates to the technical field of batteries, in particular to a cell housing, a cell, and a high-capacity battery.

### Background

Lithium batteries are widely used in various fields due to their advantages. At present, numerous cells are generally connected in parallel to satisfy the use requirements in high-capacity scenarios. The overall performance of a high-capacity battery formed of numerous cells connected in parallel is affected because the performance parameters such as capacity, resistance and voltage of the cells are inconsistent. The overall performance and service life of the high-capacity battery are further affected after the cells connected in parallel are run for a period of time because the cells vary in electrolyte consumption, differ in performance more dramatically and become poor in uniformity. Thus, to improve the performance and the service life of the high-capacity battery, it is necessary to solve the consistency problem of the cells.

Circulating the electrolytes of the cells with each other so that the cells are in a uniform electrolyte system will solve the problem of poor consistency caused by varying electrolyte consumptions of the cells. However, how to connect the electrolyte cavities of the cells with the electrolyte cavity of the high-capacity battery is a problem that needs to be solved.

### Summary

The invention provides a cell housing, a cell, and a high-capacity battery. The cell housing is a housing structure with a simple structure, which can communicate the electrolyte cavities of cells without mechanical operation, and can make the plurality of cells be in a uniform electrolyte system.

The technical solution of the invention is as follows:
The invention provides a cell housing. The cell housing has a soluble mechanism. The soluble mechanism is at least partially soluble in an electrolyte.

Further, the cell housing is provided with a housing opening. The soluble mechanism seals the housing opening, the soluble mechanism includes a soluble base layer, and after the soluble base layer is in contact with the electrolyte, the soluble base layer is dissolved, the housing opening is opened and an inner cavity of the cell housing is in communication with an exterior.

Further, the soluble base layer is made from at least one of ethylene propylene rubber (PS), polymethyl methacrylate (PMMA), thermoplastic polyurethane elastomer rubber (TPU), styrene methyl dimethacrylate copolymer (SMMA), acrylonitrile butadiene styrene copolymer (ABS), acrylate rubber-styrene-acrylonitrile copolymer (ASA), polyformaldehyde, polydodecanamide, polyamide, imide PAI, styrene-butadiene copolymer and polystyrene, preferably polyamide soluble base layer such as polydodecanamide and polyamide.

Further, the soluble mechanism further includes an isolation layer, the isolation layer is attached to an inner surface of the soluble base layer, and the inner surface of the soluble base layer is a surface opposite the inner cavity of the cell housing.

Further, the isolation layer is a film insoluble in the electrolyte.

Further, the isolation layer is an isolation coating coated the inner surface of the soluble base layer, and the isolation coating includes a binder and a solvent. The binder is at least one of polytetrafluoroethylene, polyvinylidene fluoride, styrene butadiene rubber, hydroxypropyl methylcellulose, sodium carboxymethyl cellulose, carboxyethyl cellulose and polyvinyl alcohol, and the solvent is at least one of N-methylpyrrolidone, N,N-dimethylformamide, N,N-diethylformamide, dimethyl sulfoxide, tetrahydrofuran, water and alcohol. The isolation layer binds the soluble base layer to the housing opening.

Further, a bearing table is arranged in a through passage to place the soluble mechanism.

Further, the cell housing is the soluble mechanism, and the cell housing is made from at least one of ethylene propylene rubber (PS), polymethyl methacrylate (PMMA), thermoplastic polyurethane elastomer rubber (TPU), styrene methyl dimethacrylate copolymer (SMMA), acrylonitrile butadiene styrene copolymer (ABS), acrylate rubber-styrene-acrylonitrile copolymer (ASA), polyformaldehyde, polydodecanamide, polyamide, imide PAI, and styrene-butadiene copolymer.

Further, the soluble mechanism includes an isolation assembly and a soluble assembly. At least one housing opening is provided on the cell housing, the isolation assembly and the soluble assembly are sequentially provided at the housing opening in a direction away from the cell housing, and the soluble assembly presses the isolation assembly to jointly seal the housing opening. When the soluble assembly is in contact with the electrolyte outside the cell housing, the isolation assembly is opened due to dissolution of the soluble mechanism, and an interior of the cell housing is in communication with an exterior.

Further, the isolation assembly is a sphere or a cone.

Further, the soluble mechanism includes an isolation assembly, a soluble assembly and an ejection assembly. At least one housing opening is provided on the cell housing, the isolation assembly and the soluble assembly are sequentially provided at the housing opening in a direction away from an inner cavity of the cell housing, and the soluble assembly presses the isolation assembly to jointly seal the housing opening. When the soluble assembly is in contact with the electrolyte outside the cell housing, the isolation assembly is opened due to dissolution of the soluble mechanism, and an interior of the cell housing is in communication with an exterior.

Further, the ejection assembly includes a fixing portion and an elastic component, the elastic component is a spring, and the fixing portion and the soluble assembly make the spring in a compressed state.

Further, the cell housing is provided with a mounting portion. A through mounting hole is provided on the mounting portion, and the soluble mechanism includes a base, a connection pipe that protrudes from the base, and a soluble assembly. A through hole in communication with the connection pipe is provided on the base, the soluble assembly is arranged in the connection pipe, the soluble assembly seals the connection pipe, the connection pipe passes through the mounting hole from an interior of the cell housing to an exterior, and the base is hermetically mounted on the mounting portion. When the electrolyte flows through the soluble assembly from the exterior of the cell housing to the interior, the soluble mechanism is dissolved and opened, and the electrolyte enters the interior of the cell housing.

Further, the mounting hole is a stepped hole. The stepped hole includes a first hole and a second hole that are sequentially provided from the interior of the cell housing to the exterior, and a diameter of the first hole is greater than a diameter of the second hole. The base is inserted into the first hole, and the connection pipe is inserted into the second hole.

Further, the soluble mechanism further includes a nut, a sealing gasket and a sealing ring. An external thread matching the nut is provided on the connection pipe, and the nut is arranged at the exterior of the cell housing and connected with the external thread of the connection pipe. The sealing gasket is arranged between the mounting portion and the nut, and the sealing ring is arranged between the base and the mounting portion.

Further, the soluble assembly includes a soluble sheet soluble in the electrolyte and a protective film insoluble in the electrolyte, and the protective film is arranged at a surface, facing the interior of the cell housing, of the soluble sheet and hermetically isolates the cell housing.

Further, the soluble mechanism further includes a pressing member, the pressing member presses and fixes the soluble assembly, and the pressing member is internally hollowed, in communication with the connection pipe and closely connected with the connection pipe.

Further, a housing opening is provided on a housing body of the cell housing. The soluble mechanism is arranged at an outer surface of the housing body and covers the housing opening, and the soluble mechanism includes a soluble layer and an isolation layer. The soluble layer is soluble in the electrolyte, the isolation layer is a metal plating layer at an inner surface of the soluble layer, and the inner surface of the soluble layer is a surface, facing an inner cavity of the cell housing, of the soluble layer.

Further, the metal plating layer is an aluminum plating layer or a copper plating layer, and the metal plating layer has a thickness of 200 angstroms-800 angstroms. A metal ring is arranged between the housing body and the soluble mechanism, and a projection of an intra-ring area of the metal ring covers an area of the housing opening. A hot melt binding layer is arranged between the metal ring and each of the soluble mechanism and the housing body.

Further, a single-layer filter membrane or multi-layer filter membranes is/are arranged between the housing body and the soluble mechanism, the filter membrane covers the housing opening, and after the soluble mechanism is dissolved, the electrolyte outside the cell housing enters the inner cavity of the cell housing through the filter membrane.

Further, an annular binding layer is arranged between the filter membrane and each of the housing body and the soluble mechanism, the annular binding layer binds and fixes the filter membrane with the housing body and the soluble mechanism, and a projection of an intra-ring area of the annular binding layer covers the area of the housing opening.

Further, the filter membrane is one of a polytetrafluoroethylene (PTFE) microporous membrane, a polyethylene (PE) microporous membrane, a polypropylene (PP) microporous membrane or a filter paper.

Further, the hot melt binding layer/the annular binding layer is made from one of epoxy resin, modified polypropylene, modified polyethylene and tab tape.

Further, a protrusion that has a central through hole is provided on the cell housing, and the soluble mechanism includes a cap and a soluble sheet. The cap is provided with a through hole and fixed on the protrusion, the soluble sheet is arranged between the cap and the protrusion and seals the central through hole, and the soluble sheet is soluble in the electrolyte.

Further, the cap is made from a flexible metal material and fixed on the protrusion through riveting. Or, the cap is made from a flexible rubber material and fixed on the protrusion with its elasticity. Or, the cap is fixed with the protrusion through screwing.

Further, a surface, facing an inner cavity of the cell housing, of the soluble sheet is coated with a metal plating layer insoluble in the electrolyte, and a surface of the metal plating layer is coated with a protective layer.

Further, the cell housing further includes a filter membrane. The filter membrane is arranged in the central through hole and located at a side, close to an interior of the cell housing, of the protective layer.

Further, the soluble mechanism is clamped in an opening portion of the cell housing, and at least a part of the soluble mechanism is soluble in the electrolyte, such that the opening portion of the cell housing is opened after a cell is soaked in the electrolyte.

Further, the soluble mechanism is a clamping member, the clamping member is internally hollowed and provided with a slot, and the clamping member applies a clamping force on the opening portion of the cell housing through its own elastic restoring force.

Further, the soluble mechanism includes a first clamping plate and a second clamping plate, and the first clamping plate and the second clamping plate jointly apply the clamping force on the opening portion of the cell housing so as to achieve sealing.

Further, the first clamping plate and the second clamping plate are fixed through riveting or bolting, and a rivet or a bolt is made from a material soluble in the electrolyte.

Further, the soluble mechanism includes an outer hoop and an inner support, both the outer hoop and the inner support are hollowed tubular structures with C-shaped cross sections, the inner support is arranged in the outer hoop, and the inner support and the outer hoop jointly clamp the opening portion of a pouch cell housing.

Further, the cell housing is configured to contain an electrode assembly and the electrolyte. The cell housing is the soluble mechanism, the soluble mechanism includes a main layer, and the main layer includes an outer surface and an inner surface. A binding layer and a heat sealing layer are sequentially arranged on the inner surface in a direction away from the main layer, a binding layer and a protective layer are sequentially arranged on the outer surface in a direction away from the main layer, the inner surface is a surface facing an inner cavity of the cell housing, and the outer surface is a surface away from the inner cavity of the cell housing. The main layer is a porous metal foil layer and configured to communicate electrolytes of an interior and an exterior of the cell housing, and the binding layer and the protective layer are soluble in the electrolyte.

Further, a protective layer is further provided between the binding layer and the heat sealing layer, and the protective layer is soluble in the electrolyte.

Further, the main layer is a single-layer porous metal foil or multi-layer porous metal foils, the porous metal foil has a round hole that has a diameter of 0.5 mm-1 mm, the protective layer is a nylon PA6 protective layer, and the protective layer has a thickness of 10 µm-50 µm. The binding layer is a waterproof binding layer, the binding layer is a polyurethane layer, and the binding layer is configured to bind the main layer and the protective layer/the heat sealing layer. The heat sealing layer is a composite layer, and the composite layer is made through hot melt mixing of polypropylene (CPP) and nylon PA6.

The invention further provides a cell. The cell includes the cell housing according to any one described above.

Further, the cell housing is sealed through an upper cover assembly, and at least one pouch cell is arranged in the cell housing. An opening is provided on a packaging bag of the pouch cell, and a positive pole, a negative pole and an explosion relief valve are arranged on the upper cover assembly. A positive tab and a negative tab of the pouch cell are electrically connected with the positive pole and the negative pole of the upper cover assembly through conductive connection pieces respectively.

The invention further provides a high-capacity battery. The high-capacity battery includes at least two cells described above and a multi-branch liquid storage pipe. The multi-branch liquid storage pipe includes a main pipe and at least two branch pipes, a liquid storage cavity configured to contain the electrolyte is provided in the main pipe, and the branch pipes are connected with the housing openings in one-to-one correspondence.

The invention further provides a high-capacity battery. The high-capacity battery includes an outer housing and a plurality of cells described above. An electrolyte cavity is provided in the outer housing, the electrolyte cavity is filled with the electrolyte, and the cells are contained in the electrolyte cavity.

The technical solution of the invention has the following beneficial effects:
1. In the invention, the soluble mechanism is arranged on the cell housing of the cell, and the soluble mechanism is mounted in the housing opening of the cell housing. When the cell is in a natural state, the soluble mechanism seals the cell housing, such that the inner cavity of the cell housing is isolated from the outside. When the soluble mechanism is placed in an external electrolyte, the soluble mechanism is soluble in the electrolyte outside the cell housing, and the electrolyte flows into the cell housing. Thus, the cell is injected with the electrolyte and the plurality of cells is placed in a uniform electrolyte system, a difference among the cells caused by a variation of the electrolyte consumption of the cells is reduced, consistency and stability of the cells are improved, and a performance of the battery is improved.
2. After being dissolved in the electrolyte, the polyamide soluble base layer of the soluble mechanism in the cell housing of the invention becomes a hydrophilic group, has desirable water absorption, and can capture moisture in the electrolyte which plays a role of electrolyte additive. In addition, cycle performance and battery stability of a lithium ion battery are improved.
3. The cell housing of the invention has a simple structure and is convenient to mount. The isolation layer of the soluble mechanism has a binding function, such that the soluble assembly can be mounted by simply binding the soluble assembly to the housing opening.
4. The cell housing of the invention is convenient to manufacture, reliable to use, capable of achieving electrolyte sharing among the plurality of cells without mechanical operation, and high in applicability.
5. The cell housing according to the invention has the soluble mechanism, the soluble mechanism covers the housing opening, the soluble layer of the soluble mechanism is soluble in the electrolyte, and the metal plating layer on the soluble layer prevents the electrolyte in the cell housing from dissolving the soluble layer. When there is no electrolyte outside the cell, the electrolyte of inside the cell cannot dissolve the soluble layer due to the metal plating layer, thus sealing the interior of the cell. When the plurality of cells that have the cell housings are placed in an electrolyte cavity of the high-capacity battery, the soluble layer is dissolved in the electrolyte outside the cell housing, after the soluble layer is dissolved, the metal plating layer is broken, and the electrolyte enters the inner cavity of the cell housing through the housing opening. Thus, the plurality of cells are in a common electrolyte environment, the difference among the cells caused by the variation of the electrolyte consumption is reduced, the consistency of the cells is improved, and service lives of the cells are prolonged.
6. The filter membrane structure in the cell housing of the invention can allow the electrolyte to pass through freely, and prevent impurities such as solid particles from passing through. Thus, prevent metal fragments and insoluble substances from entering the cell after dissolving of the soluble sheet and affecting the performance of the battery or even short circuiting.
7. According to the invention, the protrusion that has the central through hole is provided on the cell housing. When the cell that has the cell housing is in a normal state, the soluble mechanism seals the cell housing, and the electrolyte in the cell is isolated from the exterior. When one or more cells that have the cell housings are placed in the electrolyte cavity of the high-capacity battery, the soluble sheet is dissolved, and the external electrolyte enters the cell through the protrusion on the housing, such that the electrolyte cavity of the cell is in communication with the electrolyte cavity of the high-capacity battery, and the plurality of cells are in the common electrolyte system. The structure directly adopts the cap to fix the soluble sheet. Compared with an existing heat melting method, a fixing method of the soluble mechanism of the cell housing is simple and convenient to operate, and has a sealing effect after fixing and a high yield.
8. The cap of the soluble mechanism in the invention can be connected with the protrusion on the cell housing through riveting, its own elasticity or screwing, so as to fix and seal the soluble sheet. A more reliable connection, and more convenient operation and assembly are achieved.
9. According to the invention, the plurality of cells that have the soluble mechanisms are connected in parallel and packed, and then placed in a high-capacity battery housing filled with the electrolyte. Under the action of the electrolyte, the soluble mechanism is partially or completely dissolved, and the electrolyte can enter the cells through the opening portions. Thus, the plurality of cells are in the common electrolyte system, the difference among the cells caused by the variation of the electrolyte consumption is reduced, the performance of the entire high-capacity battery is improved, and the service life of the entire high-capacity battery is prolonged.
10. The soluble mechanism soluble in the electrolyte is arranged on the cell housing of the invention, and the opening portion can be automatically opened without the mechanical operation, such that the electrolyte sharing among the plurality of cells can be achieved. The soluble mechanism has a simple structure and a small size, and is convenient and flexible to use.
11. The cell housing according to the invention is mainly composed of the main layer that has the porous metal foil, and the protective layer and the heat sealing layer that are soluble in the electrolyte and bound to the inner surface and the outer surface of the main layer. Since materials of the protective layer and the heat sealing layer are soluble in the electrolyte, the protective layer and the heat sealing layer are automatically dissolved in the electrolyte when the plurality of cells that have the pouch cell housings are placed in the electrolyte cavity of the high-capacity battery. The electrolyte flows through the main layer that has the porous metal foil, such that the electrode assembly is partially or completely soaked in the electrolyte, the plurality of cells are in the common electrolyte environment, the difference among the cells caused by the variation of the electrolyte consumption is reduced, the consistency of the cells is improved, and the service lives of the cells are prolonged.
12. The cell housing of the invention can achieve electrolyte sharing of the plurality of cells without the mechanical operation. The cell housing is made from a variety of materials soluble in the electrolyte, dissolution times of the materials in the electrolyte are different, and dissolution time of the cell housing can be adjusted by adjusting the materials of the layers. In addition, the cell housing is convenient to manufacture and reliable to use.
13. According to the invention, after finished pouch cells are pre-charged and subjected to capacity grading, pouch cells with high consistency are selected, the plurality of pouch cells are connected in parallel and packaged in the cell housing, and the soluble mechanism is arranged on the cell housing. When the cell is in a natural state, the cell is isolated from the outside. When one or more cells are placed in the external electrolyte, the soluble mechanism is opened and the electrolyte is injected into the cell, such that the cell can be injected with the electrolyte and the plurality of cells can be placed in the uniform electrolyte system.
14. Since the pouch cells in the cells in the invention have desirable consistency, the cells manufactured also have a high yield, and the cells are in the uniform electrolyte system. Inconsistency in the performances of the cells caused by uneven electrolyte consumptions during use of the cells is reduced, desirable uniformity of the cells is achieved, the service lives of the cells are prolonged, and use stabilities of the cells are improved.

Other advantages, objectives and features of the invention will be partly embodied in the following description, and partly understood by those skilled in the art through the study and practice of the invention.

### Brief Description of the Drawings

To describe technical solutions in embodiments of the invention or in the prior art more clearly, accompanying drawings required in description of the embodiments or in the prior art will be described briefly below. Apparently, the accompanying drawings in the following description merely show some embodiments of the invention, and those skilled in the art can still derive other accompanying drawings from these accompanying drawings without creative efforts.
Fig. 1 is a schematic structural diagram of a cell housing in Embodiment 1 of the invention;
Fig. 2 is a schematic structural diagram of a cell housing in Embodiment 2 of the invention;
Fig. 3 is a schematic structural diagram of a cell housing in Embodiment 3 of the invention;
Fig. 4 is a schematic structural diagram of a cell housing in Embodiment 4 of the invention;
Fig. 5 is a schematic structural diagram of a cell housing in Embodiment 5 of the invention;
Fig. 6 is a schematic structural diagram of a soluble assembly in Embodiment 5 of the invention;
Fig. 7 is a schematic structural diagram of a high-capacity battery in Embodiments 1-6 of the invention;
Fig. 8 is a schematic structural diagram of a cell housing in Embodiment 7 of the invention;
Fig. 9 is a partial sectional view of the cell housing in Embodiment 7 of the invention;
Fig. 10 is a schematic structural diagram of a cell housing in Embodiment 8 of the invention;
Fig. 11 is a partial sectional view of the cell housing in Embodiment 8 of the invention;
Fig. 12 is a schematic structural diagram of a cell housing in Embodiment 9 of the invention;
Fig. 13 is an exploded view of a soluble mechanism in Embodiment 9 of the invention;
Fig. 14 is a sectional view of the soluble mechanism in Embodiment 9 of the invention;
Fig. 15 is a schematic structural diagram of a cell housing in Embodiment 10 of the invention;
Fig. 16 is a partial sectional view of a cell housing in Embodiment 11 of the invention;
Fig. 17 is a schematic structural diagram of the cell housing in Embodiment 11 of the invention;
Fig. 18 is a schematic structural diagram of a high-capacity battery in Embodiment 12 of the invention;
Fig. 19 is a schematic structural diagram of a multi-branch liquid storage pipe in Embodiment 12 of the invention;
Fig. 20 is a schematic sectional diagram of a cell housing in Embodiment 13 of the invention;
Fig. 21 is a schematic structural diagram of the cell housing in Embodiment 13 of the invention;
Fig. 22 is a schematic sectional diagram of a cell housing in Embodiment 14 of the invention;
Fig. 23 is a schematic structural diagram of the cell housing in Embodiment 14 of the invention;
Fig. 24 is a schematic structural diagram of a cell in Embodiment 15 of the invention;
Fig. 25 is a schematic structural diagram of a high-capacity battery in Embodiment 15 of the invention;
Fig. 26 is a schematic diagram of an exploded view of a cell housing in Embodiments 16-18 of the invention;
Fig. 27 is a schematic diagram of the cell housing in Embodiments 16-18 of the invention;
Fig. 28 is a schematic structural diagram of a high-capacity battery in Embodiment 16 of the invention;
Fig. 29 is a schematic sectional diagram of a soluble mechanism in Embodiment 19 of the invention;
Fig. 30 is a schematic structural diagram of the soluble mechanism in Embodiment 19 of the invention;
Fig. 31 is a schematic diagram of mounting the soluble mechanism to a cell housing in Embodiment 19 of the invention;
Fig. 32 is a schematic diagram of mounting a soluble mechanism to an opening portion in Embodiment 20 of the invention;
Fig. 33 is a schematic sectional diagram of a soluble mechanism in Embodiment 21 of the invention;
Fig. 34 is a schematic diagram of mounting the soluble mechanism to an opening portion in Embodiment 21 of the invention;
Fig. 35 is a schematic structural diagram I of a pouch cell in Embodiment 22 of the invention;
Fig. 36 is a schematic structural diagram II of the pouch cell in Embodiment 22 of the invention;
Fig. 37 is a schematic structural diagram of a high-capacity battery in Embodiment 23 of the invention;
Fig. 38 is a schematic sectional diagram of a cell housing in Embodiment 24 of the invention;
Fig. 39 is a schematic sectional diagram of a cell housing in Embodiment 25 of the invention;
Fig. 40 is a schematic structural diagram of a sectional view of a cell in Embodiment 26 of the invention;
Fig. 41 is a schematic diagram of placing the cell in an outer housing in Embodiment 26 of the invention;
Fig. 42 is a schematic diagram of connecting a plurality of pouch cells to an upper cover assembly in Embodiment 27 of the invention;
Fig. 43 is a schematic structural diagram of a single pouch cell in Embodiment 27 of the invention;
Fig. 44 is a schematic structural diagram of a plastic-housing cell in Embodiment 27 of the invention;
Fig. 45 is a schematic structural diagram of a plastic-housing cell in Embodiment 28 of the invention;
Fig. 46 is a schematic structural diagram of a high-capacity battery in Embodiment 29 of the invention; and
Fig. 47 is a schematic structural diagram of a multi-branch liquid storage pipe in Embodiment 29 of the invention.

Reference numerals are as follows: 11-cell housing; 12-housing opening; 13-soluble mechanism; 131-soluble base layer; 132-isolation coating; 133-isolation assembly; 14-fixing portion; 141-bearing table; 142-through passage; 143-base; 15-high-capacity battery; 16-electrolyte cavity; 21-cell housing; 22-cell positive electrode; 23-cell negative electrode; 24-housing opening; 25-soluble mechanism; 251-soluble assembly; 252-isolation assembly; 26-fixing portion; 31-cell housing; 32-cell positive electrode; 33-cell negative electrode; 34-soluble mechanism; 35-base; 36-isolation assembly; 37-soluble assembly; 38-ejection assembly; 381-elastic component; 382-fixing portion; 39-housing opening; 41-cell housing; 42-soluble mechanism; 421-base; 422-connection pipe; 423-soluble assembly; 43-mounting portion; 44-mounting hole; 441-first hole; 442-second hole; 45-sealing ring; 46-sealing gasket; 47-through hole; 48-nut; 49-bearing table; 410-pressing member; 411-multi-branch liquid storage pipe; 4110-main pipe; 4111-branch pipe; 4112-liquid storage cavity; 412-cell; 51-housing body; 52-soluble mechanism; 521-soluble layer; 522-isolation layer; 53-housing opening; 54-metal ring; 55-hot melt binding layer; 56-filter membrane; 57-annular binding layer; 58-outer housing; 59-electrolyte cavity; 510-cell; 511-cell positive electrode; 512-cell negative electrode; 61-cell housing; 62-protrusion; 621-central through hole; 63-soluble mechanism; 631-cap; 6311-through hole; 632-soluble sheet; 6321-metal plating layer; 6322-filter membrane; 6323-protective layer; 633-washer; 64-cell; 65-high-capacity battery housing; 66-electrolyte cavity; 67-injection opening; 71-clamping member; 72-slot; 73-first clamping plate; 74-second clamping plate; 75-bolt; 76-sealing gasket; 77-outer hoop; 78-inner support; 79-cell housing; 710-opening portion; 711-pouch cell; 712-positive tab; 713-negative tab; 714-outer housing; 715-cover plate; 81-cell housing; 811-main layer; 8110-inner surface; 8111-outer surface; 812-binding layer; 813-protective layer; 814-heat sealing layer; 82-cell positive electrode; 83-cell negative electrode; 84-cell; 85-outer housing; 86-electrolyte cavity; 87-electrode assembly; 91-pouch cell; 92-upper cover assembly; 93-explosion relief valve; 94-positive tab; 95-conductive connection piece; 96-positive pole; 97-open hole; 98-negative pole; 99-negative tab; 910-cell housing; 911-housing opening; 912-butt joint pipe; 913-soluble mechanism; 914-main pipe; 915-branch pipe; 916-plastic-housing cell; 917-liquid storage cavity; and 918-injection and gas extraction portion.

### Detailed Description of the Embodiments

The invention will be further described in detail in conjunction with the accompanying drawings, such that those skilled in the art can implement same with reference to the text of the description.

A cell housing mentioned in the invention may be a cell housing of a pouch cell or a cell housing of a hard-housing cell, and its use is not limited to use of a certain cell. The cell housing in the invention has a soluble mechanism. In this case, the cell housing may be used as the soluble mechanism, or the soluble mechanism may be arranged at a housing opening or an opening portion of the cell housing. After the soluble mechanism is in contact with an electrolyte, the soluble mechanism may be completely or partially dissolved in the electrolyte as long as the soluble mechanism forms a passage for the electrolyte to flow through after being in contact with the electrolyte. When the soluble mechanism is provided on the cell housing, the soluble mechanism may be arranged on an upper cover, a bottom of the cell housing or a lateral surface of the cell housing, at any position where the soluble assembly is conveniently placed in an electrolyte cavity of a high-capacity battery, or at any position where inner cavities of a plurality of cells are in communication conveniently. When the soluble mechanism is in contact with the electrolyte, an inner cavity of the cell housing is in communication with an exterior.

### Embodiment 1

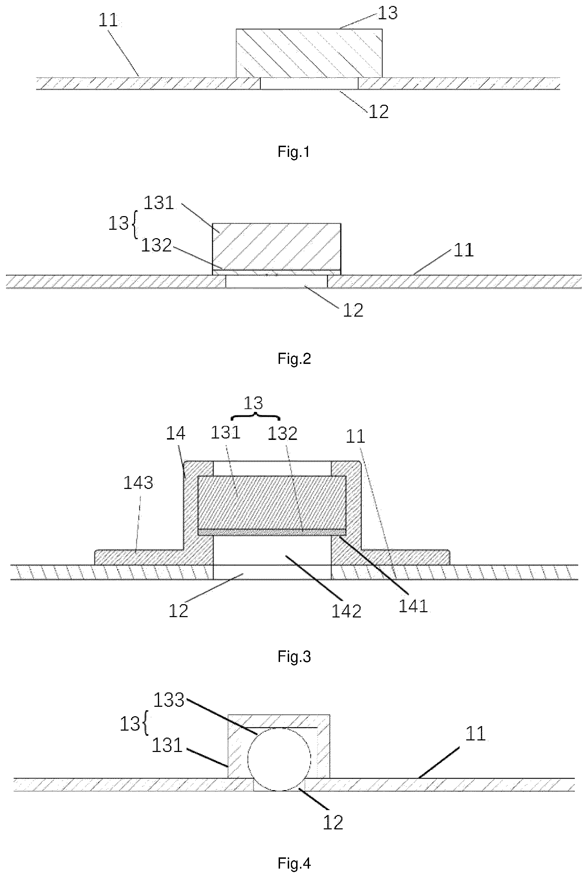

As shown in Fig. 1, this embodiment provides a cell housing. The cell housing 11 is provided with a housing opening 12 and a soluble mechanism 13. The housing opening 12 is round in general. In this embodiment, the soluble mechanism 13 is a soluble base layer soluble in an electrolyte, and the soluble base layer is a round sheet that has a diameter greater than a diameter of the housing opening 12, and covers the housing opening 12. The soluble base layer is made from at least one of ethylene propylene rubber (PS), polymethyl methacrylate (PMMA), thermoplastic polyurethane elastomer rubber (TPU), styrene methyl dimethacrylate copolymer (SMMA), acrylonitrile butadiene styrene copolymer (ABS), acrylate rubber-styrene-acrylonitrile copolymer (ASA), polyformaldehyde, polydodecanamide, polyamide, imide PAI, and styrene-butadiene copolymer. In this embodiment, the soluble base layer has a thickness of 2 mm. The soluble base layer can be bound and fixed to the housing opening 12 through a binder. Since the soluble base layer 131 has an area greater than an area of the housing opening 12 and covers the housing opening 12, the housing opening 12 is sealed.

Experiments prove that these materials of ethylene propylene rubber (PS), polymethyl methacrylate (PMMA), thermoplastic polyurethane elastomer rubber (TPU), styrene methyl dimethacrylate copolymer (SMMA), acrylonitrile butadiene styrene copolymer (ABS), acrylate rubber-styrene-acrylonitrile copolymer (ASA), polyformaldehyde, polydodecanamide, polyamide, imide(PAI, and styrene-butadiene copolymer can be gradually dissolved in the electrolyte and disappear after being soaked in the conventional electrolyte for a period of time. Dissolution times of different materials in the electrolyte vary, and range from 1 to 7 days. During the dissolution time, other assembly operations can be performed.

Those skilled in the art will readily conceive that the soluble base layer can include more than one layer, and can be made by pressing or overlapping two or more materials listed in this embodiment. The soluble base layer made from different materials varies in speed and time of dissolving in the electrolyte.

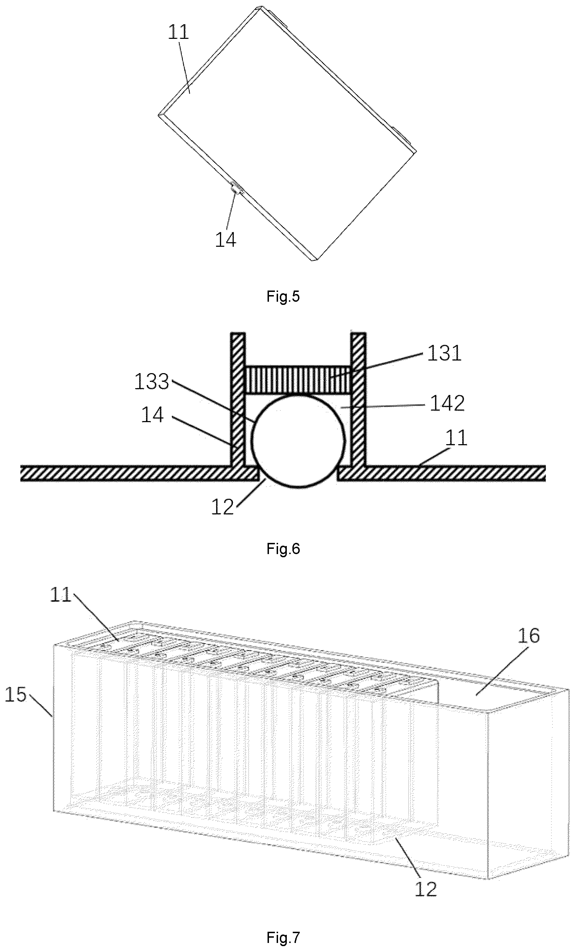

As shown in Fig. 7, when a plurality of cells that have the cell housings 11 are placed in an electrolyte cavity 16 of a high-capacity battery 15, housing openings 12 are soaked in the electrolyte and soluble base layers are dissolved in the electrolyte and thus gradually disappear since the electrolyte cavity 16 is filled with the electrolyte. As a result, the housing openings 12 are opened to make interiors of the cell housings 11 in communication with an exterior, and the electrolyte flows into the cells through the housing openings 12. Thus, electrolyte cavities inside the cells are in communication with the electrolyte cavity of the high-capacity battery 15.

In actual use, performances of the cells vary due to a variation in electrolyte consumption after a period of use, resulting in poor consistency of the cells. The plurality of cells that have the housings are placed in the electrolyte cavity 16 of the high-capacity battery 15, and since the electrolyte cavity 16 is filled with the electrolyte, the electrolyte of the high-capacity battery flows into the cells after the soluble base layers 131 of the housing openings 12 are dissolved in the electrolyte. The electrolytes of all the cells are in communication with the electrolyte cavity of the high-capacity battery, and electrolytes of all the cells are in a uniform state, thus reducing the difference among the cells, improving consistency and stability of the cells, and improving the performances of the cells.

### Embodiment 2

As shown in Fig. 2, this embodiment provides a cell housing. The cell housing 11 is provided with a housing opening 12 and a soluble mechanism 13. The housing opening 12 is round in general. The soluble mechanism 13 includes a soluble base layer 131 and an isolation layer. In this embodiment, the soluble base layer 131 is a round sheet that has a thickness of 2 mm and a diameter greater than a diameter of the housing opening 12, and covers the housing opening 12. The soluble base layer 131 can be made from the materials provided in Embodiment 1.

The isolation layer in this embodiment is an isolation coating 132 that coated on an inner surface of the soluble base layer 131. The inner surface of the soluble base layer 131 is a surface facing an inner cavity of the housing, and the isolation coating 132 completely covers the inner surface of the soluble base layer 131. The isolation coating 132 includes a binder and a solvent. The binder is at least one of polytetrafluoroethylene, polyvinylidene fluoride, styrene butadiene rubber, hydroxypropyl methylcellulose, sodium carboxymethyl cellulose, carboxyethyl cellulose and polyvinyl alcohol, and the solvent is at least one of N-methylpyrrolidone, N,N-dimethylformamide, N,N-diethylformamide, dimethyl sulfoxide, tetrahydrofuran, water and alcohol.

In this embodiment, a preparation method of the isolation coating 132 is as follows: 10 g of binder is put into 90 g of solvent, a mixture is stirred evenly to form a mobile phase coating, the coating is evenly sprayed on the inner surface of the soluble base layer 131, and the inner surface is the surface, facing the inner cavity of the housing, of the soluble base layer 131. Since the selected binder is insoluble in the electrolyte, a formed isolation coating 132 is also insoluble in the electrolyte. The isolation layer insoluble in the electrolyte is formed on the inner surface of the soluble base layer 131, and the inner surface of the soluble base layer 131 is covered on the housing opening 12. The isolation coating 132 contains the binder, such that the soluble base layer 131 can be bound to the housing opening 12, and in addition, the soluble base layer 131 has an area greater than an area of the housing opening 12, such that the soluble mechanism 13 can seal the housing opening 12.

The preparation method of the isolation coating 132 in this embodiment is only illustrative. A mass of the binder and a mass of the solvent are not limited to the mass listed in this embodiment, and can be adjusted according to a size of the housing opening 12 and a size of the soluble base layer 131.

In another embodiment, the isolation layer is a film insoluble in the electrolyte, such as a polyethylene film or a polypropylene film, with a thickness of 0.1 mm. The isolation layer covers the inner surface of the soluble base layer 131, and the inner surface is the surface, facing the inner cavity of the housing, of the soluble base layer 131. The soluble mechanism 13 covered with the isolation layer is fixed on the housing opening 12 through binding, and in addition, the soluble base layer 131 has an area greater than an area of the housing opening 12, such that the soluble mechanism 13 seals the housing opening 12.

As shown in Fig. 7, a plurality of cells that have the cell housings are placed in an electrolyte cavity 16 of a high-capacity battery 15, the electrolyte cavity 16 is a shared electrolyte cavity, the electrolyte cavity 16 is filled with the electrolyte, and housing openings 12 are soaked in the electrolyte. Since the inner surface of the soluble base layer 131 in this embodiment has the isolation coating 132 or the film insoluble in the electrolyte, the soluble base layer 131 will not dissolved in an electrolyte inside the cell, and the soluble base layer 131 is only dissolved in an electrolyte outside the cell, that is, the soluble base layer is dissolved in the electrolyte in the electrolyte cavity 16 of the high-capacity battery 15 and gradually disappears. When the soluble base layer 131 is dissolved, the isolation coating 132 coated on the inner surface of the soluble base layer 131 loses a carrier to which it is attached and no longer seals the housing opening 12. Under the fluid action of the electrolyte, the housing opening 12 is opened to make an interior of the cell housing 11 in communication with an exterior, and the electrolyte flows into the cells through the housing openings 12. Thus, electrolyte cavities inside the cells are in communication with the electrolyte cavity of the high-capacity battery 15.

### Embodiment 3

As shown in Figs. 3 and 5, this embodiment provides a cell housing. The cell housing 11 is provided with a housing opening 12, a soluble mechanism 13 and a fixing portion 14. The housing opening 12 is round in general. The soluble mechanism 13 is the soluble mechanism that only has the soluble base layer in Embodiment 1 or the soluble base layer in Embodiment 2 with the isolation layer on the inner surface of the soluble base layer, and the soluble base layer 131 is made from one or more materials of the soluble base layer 131 listed in Embodiments 1 and 2. The fixing portion 14 is arranged outside the housing opening 12. The fixing portion 14 is provided with a base 143, a through passage 142, and a bearing table 141 in the through passage 142. The through passage 142 is a cylindrical passage, the through passage 142 is in communication with the housing opening 12, and the through passage 142 has a diameter greater than or equal to a diameter of the housing opening 12. The soluble mechanism 13 is fixedly placed on the bearing table 141 and the fixing method can be binding, and the soluble mechanism 13 seals the through passage 142. Thus, the soluble mechanism 13 seals the housing opening 12. The fixing portion 14 is made of metal or plastic insoluble in the electrolyte, and the fixing portion 14 can be fixed on the housing through binding or welding.

### Embodiment 4

As shown in Fig. 4, this embodiment provides a cell housing. The cell housing 11 is provided with a housing opening 12 and a soluble mechanism 13, and the soluble mechanism 13 includes a soluble base layer 131 and an isolation assembly 133. The housing opening 12 is a round opening in general. In this embodiment, the isolation assembly 133 is a sphere that has a greater diameter than the housing opening 12, and made from material of glass, plastic and other materials insoluble in the electrolyte. The soluble base layer 131 has a tubular structure with a thickness of 2 mm and an opened end, and encloses the isolation assembly 133 and presses the isolation assembly 133 against the housing opening 12, so as to seal the housing opening 12. The soluble mechanism 13 is fixed on the housing opening 12 through binding, etc. The soluble base layer 131 in this embodiment can be made from the material of the soluble base layer in Embodiment 1. Experiments prove that the above materials can be dissolved in the electrolyte.

As shown in Fig. 7, a plurality of cells that have the cell housings of this embodiment are placed in an electrolyte cavity 16 of a high-capacity battery 15, and the electrolyte cavity 16 is filled with the electrolyte. Thus, housing openings 12 are soaked in the electrolyte and soluble base layers 131 are dissolved in the electrolyte and thus gradually disappear. In this case, the soluble base layer 131 no longer presses the isolation assembly 133, and the isolation assembly 133 is separated from the housing opening 12. As a result, the housing opening 12 is opened to make an interior of the cell in communication with an exterior, and the electrolyte flows into the cells through the housing openings 12. Thus, electrolyte cavities inside the cells are in communication with the electrolyte cavity of the high-capacity battery.

### Embodiment 5

As shown in Figs. 5 and 6, this embodiment provides a cell housing. The cell housing 11 is provided with a housing opening 12, a fixing portion 14 and a soluble mechanism 13. The soluble mechanism 13 includes a soluble base layer 131 and an isolation assembly 133. The fixing portion 14 is a tubular structure fixedly arranged at an exterior of the housing opening 12. The fixing portion 14 is made of metal or plastic insoluble in an electrolyte, and the fixing method is binding or welding. The fixing portion 14 includes a through passage 142. The through passage 142 communicates an inner cavity of the cell housing and an exterior of the cell housing. The soluble base layer 131 is a round sheet that has a thickness of 2 mm and a diameter greater than a diameter of the housing opening 12. The isolating assembly 133 is a sphere that has a diameter greater than the diameter of the housing opening 12, and can be made of glass or plastic insoluble in the electrolyte. The soluble base layer 131 is mounted on the fixing portion 14 through binding or screwing, and presses the isolation assembly 133 to seal the through passage 142, such that the interior of the battery is isolated from the exterior.

As shown in Fig. 7, a plurality of cells that have the cell housings of this embodiment are placed in an electrolyte cavity 16 of a high-capacity battery 15, and the electrolyte cavity 16 is filled with the electrolyte. Thus, housing openings 12 are soaked in the electrolyte and soluble base layers 131 are dissolved in the electrolyte and thus gradually disappear. After the soluble base layer 131 disappears and no longer presses the isolation assembly 133, the through passage 142 is no longer sealed. As a result, the housing opening 12 is opened to make an interior of the cell housing 11 in communication with an exterior, and the electrolyte flows into the cells through the housing openings 12. Thus, electrolyte cavities inside the cells are in communication with the electrolyte cavity of the high-capacity battery.

### Embodiment 6

This embodiment provides a cell housing. The cell housing is a soluble mechanism, and the cell housing is made from at least one of ethylene propylene rubber (PS), polymethyl methacrylate (PMMA), thermoplastic polyurethane elastomer rubber (TPU), styrene methyl dimethacrylate copolymer (SMMA), acrylonitrile butadiene styrene copolymer (ABS), acrylate rubber-styrene-acrylonitrile copolymer (ASA), polyformaldehyde, polydodecanamide, polyamide, imide PAI, and styrene-butadiene copolymer. Due to the different dissolution speeds of the different materials in the electrolyte, the housing material can be made from one single material, or can be a multi-layer housing made of more than two materials, so as to satisfy a time requirement for dissolving of the housing in the electrolyte.

A plurality of cells that have the cell housings of this embodiment are placed in an electrolyte cavity of a high-capacity battery, and the electrolyte cavity is filled with the electrolyte. Thus, cell housings are dissolved in the electrolyte and disappear, electrodes in the cell housings are in the common electrolyte cavity of the high-capacity battery, all the cells are in a uniform electrolyte environment, and a difference caused by a variation of electrolyte consumption of the cells during operation is reduced or eliminated. In addition, the material of the housing also has a function of electrolyte additive after dissolution, electrolyte moisture can be removed, and service lives of the cells can be prolonged.

### Embodiment 7

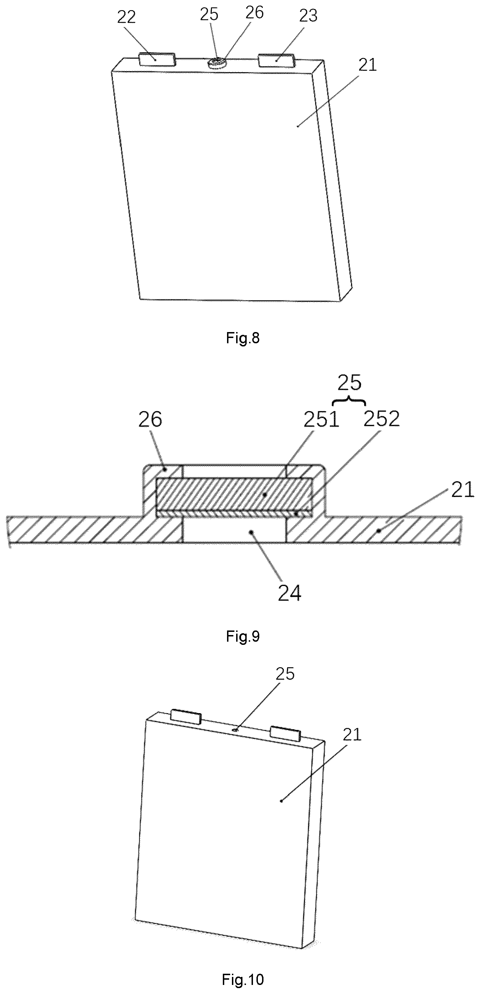

As shown in Figs. 8-9, this embodiment provides a cell housing. The cell housing 21 is provided with a housing opening 24, and the soluble mechanism 25 includes a soluble assembly 251 and an isolation assembly 252. The isolation assembly 252 is a polypropylene film or a polyethylene film that has a thickness of 0.1 mm, the soluble assembly 251 is a polymethyl methacrylate sheet that has a thickness of 2 mm, and the polypropylene film completely covers the housing opening 24. In addition, the polypropylene film is attached to a surface, close to the housing opening 24, of the soluble assembly 251. An area of the polypropylene film and an area of the polymethyl methacrylate sheet are both greater than an area of the housing opening 24, such that the soluble mechanism 25 can cover the housing opening 24 to isolate an electrolyte in a cell cavity from an exterior. A fixing portion 26 is arranged outside the housing opening 24 to limit movement of the soluble mechanism 25 in a thickness direction, such that the polymethyl methacrylate sheet covered with the polypropylene film seals the housing opening 24.

During work, a cell positive electrode 22 and a cell negative electrode 23 of a cell are current lead-out terminals respectively. A plurality of cells that have the cell housings 21 are placed in an electrolyte cavity of a high-capacity battery, and the polymethyl methacrylate sheet on the housing opening 24 is gradually dissolved and disappears due to contact with an external electrolyte. In addition, the polypropylene film falls off from the housing opening 24 under the fluid action of the electrolyte, the housing opening 24 is in communication with the exterior, and the electrolyte in the electrolyte cavity of the high-capacity battery flows into the cell cavity through the housing opening 24, making the electrolyte cavities inside the cells in communication with the electrolyte cavity of the high-capacity battery.

### Embodiment 8

As shown in Figs. 10-11, in this embodiment, the cell housing 21 is provided with a housing opening 24, the housing opening 24 is round, an isolation assembly 252 is a sphere, a fixing portion 26 is arranged outside the opening, the sphere is located in the fixing portion 26, and a gap is left between the fixing portion 26 and the sphere. The soluble assembly 251 is a polymethyl methacrylate sheet that has a thickness of 3 mm, and the sphere has a diameter greater than a diameter of the housing opening 24. The polymethyl methacrylate sheet can cover the housing opening 24, and the polymethyl methacrylate sheet presses the sphere, such that the sphere seals the housing opening 24. The polymethyl methacrylate sheet is fixed with the fixing portion 26 through screwing or snap fit, and the sphere can be made of glass or metal.

During work, a plurality of cells that have the cell housings are placed in an electrolyte cavity of a high-capacity battery, and the polymethyl methacrylate sheet is gradually dissolved and disappears due to contact with an external electrolyte. Since the sphere is no longer pressed by the polymethyl methacrylate sheet, and the gap exists between the fixing portion 26 and the polymethyl methacrylate sheet, the sphere moves, the housing opening 24 is partially or completely in communication with the exterior, and the electrolyte in the electrolyte cavity of the high-capacity battery flows into the cell cavity through the housing opening 24, making the electrolyte cavities in the cells in communication with the electrolyte cavity of the high-capacity battery.

### Embodiment 9

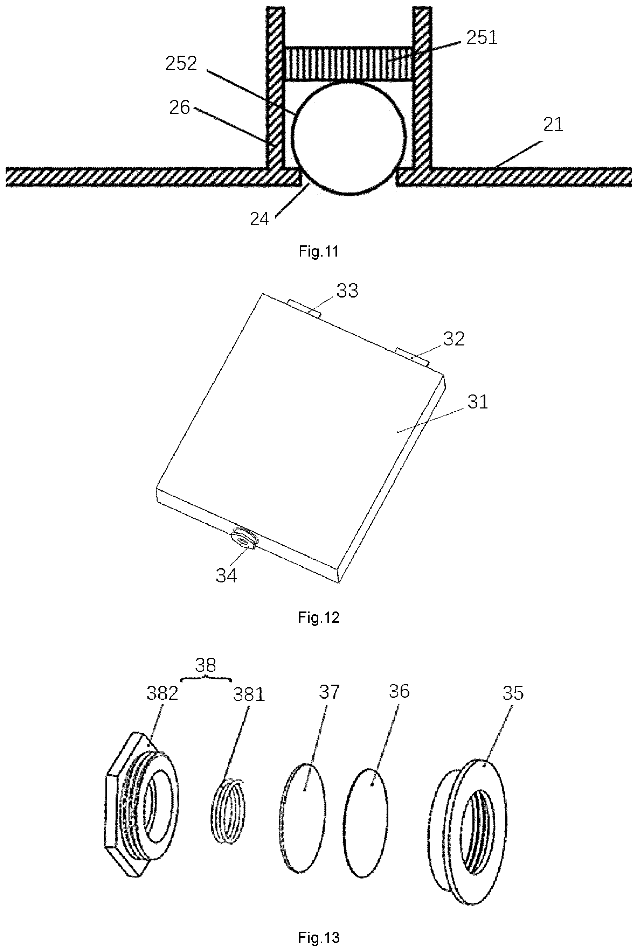

As shown in Figs. 12-14, this embodiment provides a cell housing. The cell housing 31 is provided with a housing opening 39, and a soluble mechanism 34 is arranged on the housing opening 39. The soluble mechanism 34 includes an isolation assembly 36, a soluble assembly 37, an ejection assembly 38 and a base 35 that has a central hole. The ejection assembly 38 includes an elastic component 381 and a fixing portion 382, and the isolation assembly 36 is a polypropylene film that has a thickness of 0.1 mm. The soluble assembly 37 is a polymethyl methacrylate sheet that has a thickness of 2 mm. The polypropylene film has a size to completely cover the housing opening 39, and the polypropylene film covers a surface, facing the housing opening 39, of the polymethyl methacrylate sheet. The base 35 is made of aluminum and welded on the housing opening 39 through laser welding. The base 35 is provided with an internal thread, and the polymethyl methacrylate sheet covered with the polypropylene film is placed on the central hole of the base 35, with a surface on which the polypropylene film is provided facing an interior of the housing. An outer side of the polymethyl methacrylate sheet is provided with the elastic component 381 and the fixing portion 382. In this embodiment, the elastic component 381 is a spring, the fixing portion 382 is provided with a central hole, the fixing portion 382 is internally provided with an external thread matching the base 35, and the fixing portion 382 and the base 35 are connected through the threads, such that the spring is in a compressed state, and the polymethyl methacrylate sheet covered with the polypropylene film seals the housing opening 39.

A cell positive electrode 32 and a cell negative electrode 33 of the cell are current lead-out terminals respectively, and the cell housing is the cell housing 31 in this embodiment. When the cell is in a natural state and is not in contact with an external electrolyte, the isolation assembly 36 is the polypropylene film insoluble in the electrolyte, and an interior of the cell housing 31 is hermetically isolated from an exterior. When a plurality of cells that have the soluble mechanisms 34 are placed in an electrolyte cavity of a high-capacity battery, the polymethyl methacrylate sheet is gradually dissolved and disappears due to contact with the external electrolyte, and the spring is no longer pressed by the polymethyl methacrylate sheet. Under the elastic action of the spring, the polypropylene film is ejected, and the housing opening 39 is no longer sealed. The external electrolyte passes through the central hole of the base 35 to be in communication with the opening of the cell housing 31 through the central hole of the fixing portion 382. Thus, the electrolyte can enter the cell cavity, and the electrolyte cavities of the cells and the electrolyte cavity of the high-capacity battery are in the same system.

The spring in this embodiment can also be other elastic components, such as a retractable spiky component that can achieve the same effect. In this embodiment, the fixing portion 382 can be directly bound or welded to the housing opening 39 without providing the base 35, and the pressed elastic component 381 is pressed by the fixing portion 382. In this embodiment, a connection between the base 35 and the fixing portion 382 can adopt snap fit or other connection methods.

### Embodiment 10

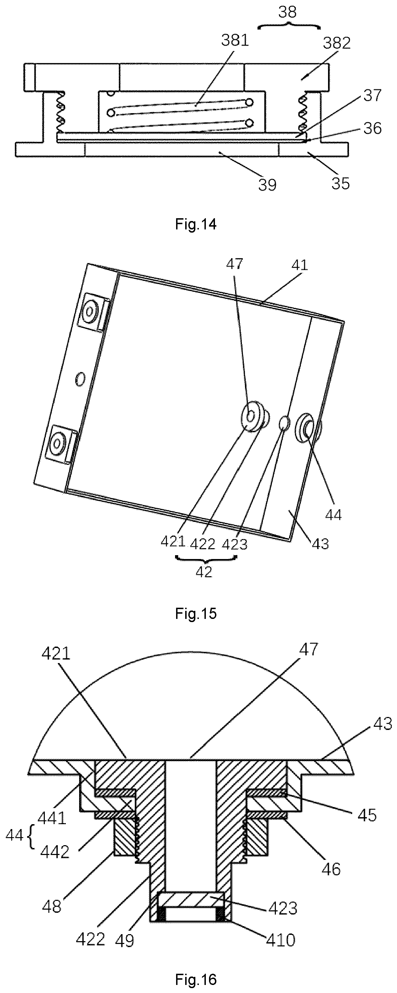

As shown in Fig. 15, this embodiment provides a cell housing. The cell housing 41 is provided with a soluble mechanism 42, and the soluble mechanism 42 includes a base 421, a connection pipe 422 protruding from the base 421 and a soluble assembly 423. The cell housing 41 is provided with a mounting hole 44, and a side wall of the housing where the mounting hole 44 is located is a mounting portion 43. The base 421 is provided with a through hole 47, and the through hole 47 is in communication with the connection pipe 422. The connection pipe 422 penetrates the mounting hole 44 outwards from an interior of the cell housing, and the base 421 is hermetically mounted on the mounting portion 43 through binding. The soluble assembly 423 is arranged in the connection pipe 422. In this embodiment, the soluble assembly 423 is a polymethyl methacrylate sheet with one surface covered with a polypropylene film, the polymethyl methacrylate sheet has a thickness of 2 mm, the polypropylene film has a thickness of 0.1 mm, and the polypropylene film completely covers a surface, facing the interior of housing, of the polymethyl methacrylate sheet. The soluble assembly 423 is hermetically mounted in the connection pipe 422, such that the connection pipe 422 and the interior of the housing form a closed cavity.

When the cell housing 41 is in a natural state, the interior of the cell housing 41 is hermetically isolated from the exterior. When the cell housing 41 is placed in an external electrolyte, or when the electrolyte is injected into the connection pipe 422 of the soluble mechanism 42, the electrolyte is in contact with the polymethyl methacrylate sheet, and the polymethyl methacrylate sheet can be dissolved in the electrolyte and gradually disappears. After the polymethyl methacrylate sheet disappears, the polypropylene film moves under the action of the fluid, and no longer seals the connection pipe 422, such that the interior of the cell housing 41 is in communication with the exterior, and the electrolyte flows into the cell housing 41 through the connection pipe 422.

### Embodiment 11

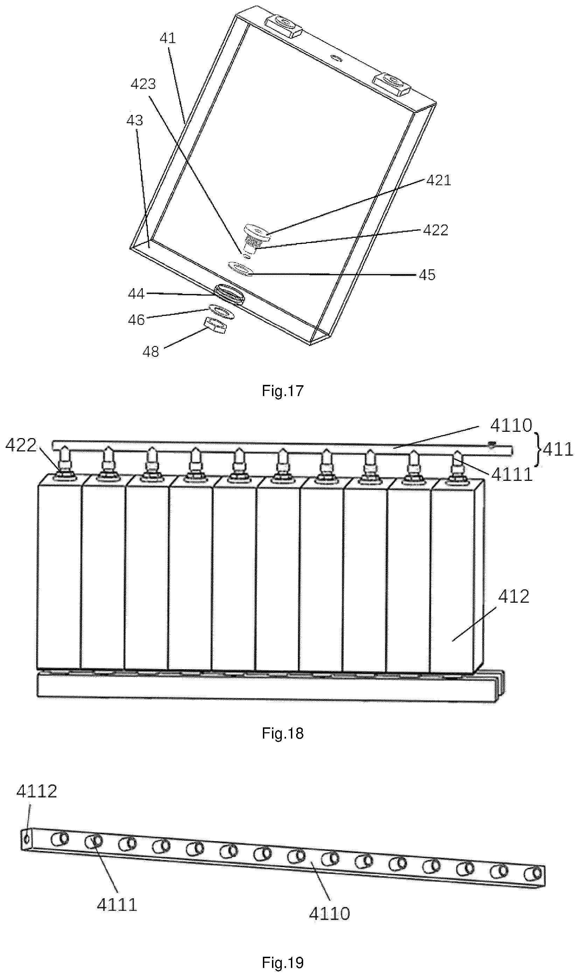

As shown in Figs. 16 and 17, this embodiment provides a cell housing. The cell housing 41 is provided with a soluble mechanism 42, the soluble mechanism 42 includes a base 421, a connection pipe 422 protruding from the base 421 and a soluble assembly 423. The base 421 has a through hole 47, the through hole 47 is in communication with the connection pipe 422, and a mounting hole 44 is provided on the housing. Aside wall of the housing where the mounting hole 44 is located is a mounting portion 43, and the mounting hole 44 is a stepped hole. The mounting hole 44 includes a first hole 441 and a second hole 442 sequentially arranged from an interior of the housing to an exterior, a diameter of the first hole 441 is greater than a diameter of the second hole 442, and the connection pipe 422 penetrates the mounting hole 44 outwards from the interior of the housing. The base 421 is inserted in the first hole 441, the connection pipe 422 is inserted in the second hole 442, the connection pipe 422 is provided with an external thread, and a portion provided with the external thread is at the exterior of the cell housing. The soluble mechanism 42 further includes a nut 48. The nut 48 is provided with an internal thread matching the external thread on the connection pipe 422, and the connection pipe 422 and the nut 48 are closely connected through the threads, so as to fix the soluble mechanism 42 on the cell housing. In this embodiment, the soluble assembly 423 is a polymethyl methacrylate sheet with a surface covered with a polypropylene film, the polymethyl methacrylate sheet has a thickness of 2 mm, the polypropylene film has a thickness of 0.1 mm, and the polypropylene film completely covers a surface, facing the interior of the housing, of the polymethyl methacrylate sheet. A bearing table 49 is arranged in the connection pipe 422, and the soluble assembly 423 is placed on the bearing table 49, and seals the through hole 47. The soluble assembly 423 further includes an internally hollowed pressing member 410, the pressing member 410 presses the soluble assembly 423 to fix the soluble assembly 423 to the bearing table 49, and is hermetically connected with the connection pipe 422, the connection method can be screwing, snap fit, binding, etc. And the cavity formed in the housing is hermetically isolated from the exterior of the cell housing 41.

When the cell housing 41 is in a natural state, the interior of the cell housing 41 is hermetically isolated from the exterior. When the cell housing 41 is placed in an external electrolyte, or when the electrolyte is injected into the connection pipe 422 of the soluble mechanism 42, the electrolyte is in contact with the polymethyl methacrylate sheet through the connection pipe 422, and the polymethyl methacrylate sheet is gradually dissolved in the electrolyte and disappears. The polypropylene film moves under the action of the fluid, and no longer seals the connection pipe 422, such that the interior of the cell housing 41 is in communication with the exterior, and the electrolyte flows into the cell housing 41 through the connection pipe 422.

In other embodiments, the soluble mechanism 42 further includes a sealing gasket 46, and the sealing gasket 46 is arranged between the base 421 and the mounting portion 43, so as to seal a joint between the nut 48 and the housing. In other embodiments, the soluble mechanism 42 further includes a sealing ring 45, and the sealing ring 45 is arranged between the base 421 and the mounting portion 43, so as to seal a joint between the base 421 and the housing.

### Embodiment 12

As shown in Figs. 18 and 19, this embodiment provides a high-capacity battery. The high-capacity battery includes a plurality of cells 412 connected in parallel and a multi-branch liquid storage pipe 411. A housing of the cell 412 is the cell housing 41 in Embodiment 10 or 11, and the multi-branch liquid storage pipe 411 includes a main pipe 4110 and a plurality of branch pipes 4111. An inner cavity of the main pipe 4110 is a liquid storage cavity 4112 for containing an electrolyte, and the branch pipes 4111 and connection pipes 422 of the cells 412 are connected in one-to-one correspondence. Since the connection pipes 422 are internally provided with the soluble assemblies 423, the electrolyte enters each cell 412 through the main pipe 4110 and the branch pipe 4111 when the electrolyte is injected into the multi-branch liquid storage pipe 411. Since the soluble assemblies 423 are arranged at the connection pipes 422 of the cells 412, soluble sheets in the soluble assemblies 423 are dissolved in the electrolyte and gradually disappear, protective films no longer seal the connection pipes 422 under the fluid action of the electrolyte, and the electrolyte flows into the cells 412 and then into each cell. Since the electrolyte is contained in the liquid storage cavity 4112, both the cells 412 and the liquid storage cavity 4112 are in the common electrolyte system, thus reducing a performance difference caused by a variation of electrolyte consumption of the cells. This high-capacity battery has desirable uniformity.

### Embodiment 13

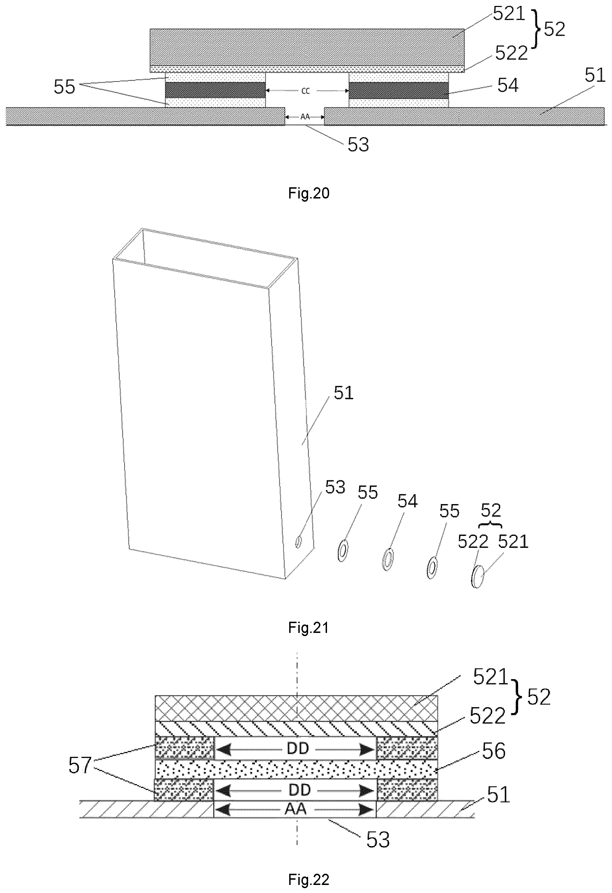

As shown in Figs. 20 and 21, this embodiment provides a cell housing. The cell housing includes a housing body 51 and a soluble mechanism 52. The housing body 51 is provided with a housing opening 53, the soluble mechanism 52 is arranged on an outer surface of the housing body 51 and the soluble mechanism 52 covers the housing opening 53. The soluble mechanism 52 includes a soluble layer 521 and an isolation layer 522. In this embodiment, the soluble layer 521 has a thickness of 1.5 mm and is made from one of polystyrene (PS), polymethyl methacrylate (PMMA), thermoplastic polyurethane elastomer rubber (TPU), styrene methyl dimethacrylate copolymer (SMMA), and engineering plastics (ASA). The isolation layer 522 is a metal plating layer on an inner surface of the soluble layer 521, and the inner surface of the soluble layer 521 is a surface, facing the inner cavity of the cell housing, of the soluble layer 521.

In this embodiment, a metal ring 54 is arranged between the soluble mechanism 52 and the housing body 51, and a hot melt binding layer 55 is arranged between the metal ring 54 and each of the housing body 51 and the soluble mechanism 52. A coating shape of the hot melt binding layer 55 is a ring that has the same inner diameter and outer diameter as the metal ring 54, and the hot melt binding layer 55 is made from a modified polypropylene film. Since the modified polypropylene is insoluble in the electrolyte, a projection of an intra-ring area CC of the metal ring 54 is required to cover an area AA of the housing opening 53 in order to ensure that the housing opening 53 is in communication with the inner cavity of the cell after the soluble layer 521 of the soluble mechanism 52 is dissolved. The hot melt binding layer 55 is located on a contact surface between the metal ring 54 and each of the soluble mechanism 52 and the housing body 51, and does not block the housing opening 53.

A use method of the metal ring 54 is as follows: the metal ring 54 is placed on the outer surface of the housing opening 53 and between the housing body 51 and the soluble mechanism 52, and making the projection of the intra-ring area CC of the metal ring 54 covers the area AA of the housing opening 53. An electromagnetic induction device is placed on the soluble layer 521, and the electromagnetic induction device is turned on, and electromagnetic induction is conducted to the metal ring 54, such that the metal ring 54 is instantly heated up, and the modified polypropylene melts when heated. The melted modified polypropylene binds and fixes the metal ring 54 with the housing body 51 and the soluble mechanism 52, so as to fix the soluble mechanism 52 on the housing body 51.

The metal plating layer is usually an aluminum plating layer or a copper plating layer, and formed on the surface of the soluble layer 521 through a vacuum evaporation process. The metal plating layer has a thickness of 200 angstroms-800 angstroms. The aluminum plating or copper plating isolation layer 522 is insoluble in the electrolyte and has desirable brittleness. After the soluble layer 521 is dissolved, the metal plating layer is easily broken, and can be used as a desirable isolation layer 522 and can isolate air and shield light. Experiments prove that these materials of polystyrene (PS), polymethyl methacrylate (PMMA), thermoplastic polyurethane elastomer rubber (TPU), styrene methyl dimethacrylate copolymer (SMMA), and engineering plastics (ASA) can be gradually dissolved in the electrolyte and disappear after being soaked in the conventional electrolyte for a period of time. Since different materials vary in time of dissolution in the electrolyte, different materials are selected as the soluble layer 521 according to actual use needs. The greater the thickness of the soluble layer 521 is, the longer dissolution time is required. According to experimental results, the soluble layer 521 preferably has a thickness less than 2 mm since such a soluble layer is easy to fix with proper dissolution time.

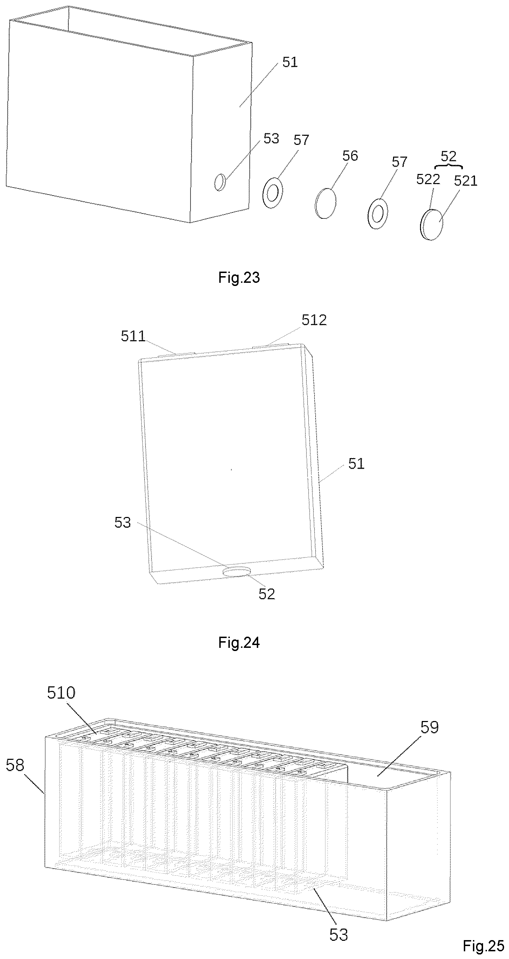

As shown in Fig. 25, a plurality of cells 510 that have the cell housings are placed in an electrolyte cavity 59 of a high-capacity battery, the electrolyte cavity 59 is filled with an electrolyte, and housing openings 53 are soaked in the electrolyte. Since the inner surface of the soluble layer 521 has the metal plating layer, the soluble layer 521 will not be dissolved in an electrolyte inside the cell 510, and the soluble layer 521 is only dissolved in an electrolyte outside the cell 510, that is, the soluble layer is gradually dissolved in the electrolyte in the electrolyte cavity 59. After the soluble layer 521 is dissolved in the electrolyte, the metal plating layer on the surface of the soluble layer 521 only has a thickness of 200 angstroms-800 angstroms, and is broken without support from the soluble layer 521, such that the housing opening 53 is opened. Under the fluid action of the electrolyte, the electrolyte in the electrolyte cavity 59 flows into the cell housing of the cell 510, and circulation of the electrolytes inside and outside the cell 510 is achieved.

In actual use, performances of the cells 510 vary due to a variation in electrolyte consumption after a period of use of the cell 510, resulting in inconsistency of the cells. The plurality of cells 510 that have the cell housings are placed in the electrolyte cavity 59 of the high-capacity battery, and since the electrolyte cavity 59 is filled with the electrolyte, the electrolyte of the high-capacity battery flows into the cells after the soluble layer 521 of the housing opening 53 is dissolved. The electrolyte cavities of all the cells 510 are in communication with the electrolyte cavity of the high-capacity battery, and electrolytes of all the cells 510 are in a uniform state, thus reducing the difference among the cells, improving consistency and stability of the cells 510, and improving the performance of the cells.

### Embodiment 14

As shown in Figs. 22 and 23, this embodiment provides a cell housing. The cell housing includes a housing body 51 and a soluble mechanism 52. The housing body 51 is provided with a housing opening 53, the soluble mechanism 52 is arranged on an outer surface of the housing body 51 and the soluble mechanism 52 covers the housing opening 53. The soluble mechanism 52 includes a soluble layer 521 and an isolation layer 522. In this embodiment, the soluble layer 521 has a thickness of 2 mm and is made from one of polystyrene (PS), polymethyl methacrylate (PMMA), thermoplastic polyurethane elastomer rubber (TPU), styrene methyl dimethacrylate copolymer (SMMA), and engineering plastics (ASA). The isolation layer 522 is a metal plating layer on an inner surface of the soluble layer 521, and the inner surface of the soluble layer 521 is a surface, facing an inner cavity of the cell housing, of the soluble layer 521. A filter membrane 56 is arranged between the housing body 51 and the soluble mechanism 52, and an upper surface and a lower surface of the filter membrane 56 are provided with annular binding layers 57, that is, the annular binding layer 57 is located on a contact surface between the filter membrane 56 and each of the housing body 51 and the soluble mechanism 52. The annular binding layer 57 is made from one of epoxy resin, modified polypropylene/polyethylene and a tab tape. Since the annular binding layer 57 is insoluble in the electrolyte, a projection of an intra-ring area DD of the annular binding layer 57 covers an area AA of the housing opening 53 in order to ensure that the electrolyte can flow into the housing opening 53 through the filter membrane 56 after the soluble layer 521 is dissolved in the electrolyte. The annular binding layer 57 will not block the housing opening 53.

In this embodiment, the filter membrane 56 is made from one of polytetrafluoroethylene, modified polypropylene, modified polyethylene and filter paper. The filter membrane 56 can be in a single layer or multi-layer arrangement. When the multi-layer filter membranes 56 are arranged, the filter membranes 56 can be fixed through binding or welding.

In this embodiment, the metal plating layer on the surface of the soluble layer 521 can be a nickel plating layer or a zinc plating layer in addition to the aluminum plating layer or the copper plating layer, and the plating layer can be formed on the surface of the soluble layer 521 through a vacuum evaporation process, electroplating, electroless plating, electrochemical plating, etc. The metal plating layer has a thickness of 200 angstroms-800 angstroms, with "angstrom" as a length unit and ten "angstroms" equal to 1 nanometer. Those skilled in the art will readily conceive that in addition to fixing the filter membrane 56 between the housing body 51 and the soluble mechanism 52 through binding, welding processes such as ultrasonic welding, vibration welding and thermal welding can also be used for fixing.

As shown in Fig. 25, a plurality of cells 510 that have the cell housings are placed in an electrolyte cavity 59 of a high-capacity battery, the electrolyte cavity 59 is filled with the electrolyte, and housing openings 53 are soaked in the electrolyte. Since the inner surface of the soluble layer 521 has the metal plating layer, the soluble layer 521 will not be dissolved in an electrolyte of inside the cell 510, and the soluble layer 521 is only dissolved in an electrolyte outside the cell 510, that is, the soluble layer is gradually dissolved in the electrolyte in the electrolyte cavity 59. After the soluble layer 521 is dissolved in the electrolyte, the metal plating layer on the surface of the soluble layer 521 only has a thickness of 200 angstroms-800 angstroms, and is broken without support from the soluble layer 521, such that the housing opening 53 is opened. Under the fluid action of the electrolyte, the electrolyte flows into the cell 510 housing, and circulation of the electrolytes inside and outside the cell 510 is achieved.

### Embodiment 15

As shown in Fig. 24, this embodiment provides a cell. A cell housing of the cell 510 is the cell housing of Embodiments 13 or 14. The cell housing contains electrode assemblies and an electrolyte. A cell positive electrode 511 and a cell negative electrode 512 are current lead-out terminals of the cell 510. A bottom surface of the cell housing is provided with a housing opening 53, and a soluble mechanism 52 is arranged at the housing opening 53. In order to satisfy use needs, the housing opening 53 can be located at any position of the cell housing, and can be located at an upper end surface, a side surface or a bottom surface of the housing. One or more housing openings 53 can be provided on the cell housing, the soluble mechanism 52 can be only arranged at one housing opening 53, and the soluble mechanisms 52 can be arranged at a plurality of housing openings 53.

As shown in Fig. 25, this embodiment also provides a high-capacity battery. The high-capacity battery includes an outer housing 58 and a plurality of the cells 510. The outer housing 58 is internally provided with an electrolyte cavity 59, the electrolyte cavity 59 is filled with the electrolyte, and the plurality of cells 510 are placed in the electrolyte cavity 59. Since the cell housing of the cell 510 is provided with the housing opening 53, and the housing opening 53 is provided with a soluble mechanism 52, housing openings 53 are soaked in the electrolyte. Since the inner surface of the soluble layer 521 has the metal plating layer, the soluble layer 521 will not be dissolved in the electrolyte inside the cell 510, and the soluble layer 521 is only dissolved in an electrolyte outside the cell 510, that is, the soluble layer is dissolved in the electrolyte in the electrolyte cavity 59. After the soluble layer 521 is dissolved in the electrolyte, the metal plating layer on the surface of the soluble layer 521 only has a thickness of 200 angstroms-800 angstroms, and is broken without support from the soluble layer 521, such that the housing opening 53 is opened. Under the fluid action of the electrolyte, the electrolyte flows into the housing of the cell 510, and circulation of the electrolytes inside and outside the cell 510 is achieved.

### Embodiment 16

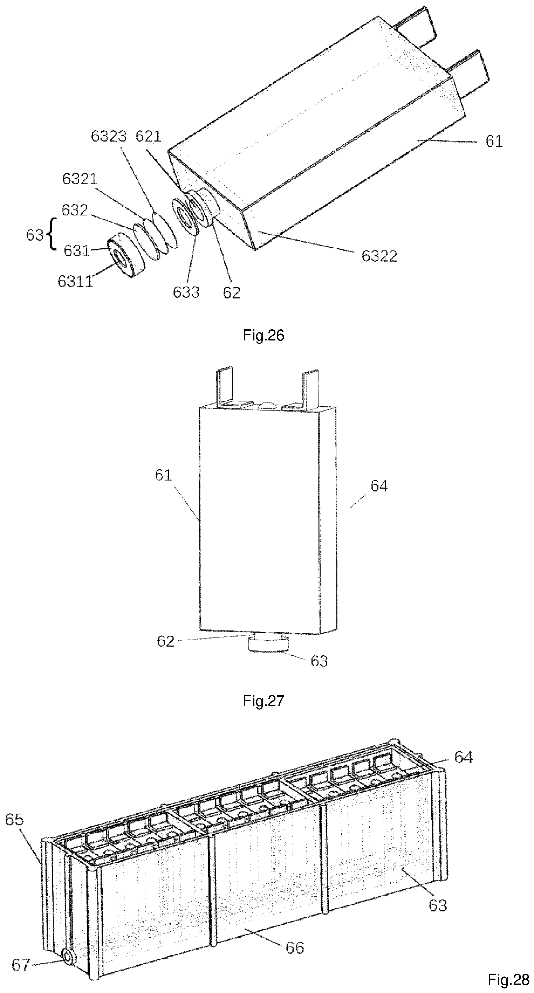

As shown in Figs. 26 and 27, this embodiment provides a cell housing. The cell housing 61 is provided with a protrusion 62 in a direction facing an exterior of the battery. The protrusion 62 has a central through hole 621, the central through hole 621 communicates an inner cavity of the cell with an exterior of the battery. A soluble mechanism 63 is arranged at the protrusion 62. The soluble mechanism 63 includes a cap 631 and a soluble sheet 632, and the cap 631 is provided with a through hole 6311. The through hole 6311 is arranged corresponding to the central through hole 621, the soluble sheet 632 is arranged between the cap 631 and the protrusion 62, and the soluble sheet 632 has a size to cover the central through hole 621. The cap 631 fixes the soluble sheet 632 on the protrusion 62, such that the soluble mechanism 63 can seal the central through hole 621 of the protrusion 62. The soluble sheet 632 is made of a material that is soluble in an electrolyte, preferably a material that can be fully dissolved in the electrolyte and will not pollute the electrolyte. Experiments prove that polystyrene (PS), polymethyl methacrylate (PMMA), thermoplastic polyurethane elastomer rubber (TPU), styrene methyl dimethacrylate copolymer (SMMA), and engineering plastics (ASA) can be well dissolved in the electrolyte without polluting the electrolyte. Polymethyl methacrylate (PMMA) can improve the performance of the cell as an electrolyte additive after being dissolved in the electrolyte and is a preferred material. The thickness of the soluble sheet 632 is also one of key parameters. As the thickness of the soluble sheet 632 increases, it will take longer to be dissolved in the electrolyte. In order to make the dissolution time of the soluble sheet 632 satisfy design requirements after each cell 64 is soaked in the electrolyte, the thickness of the soluble sheet 632 is preferably less than 2 mm.

As shown in Fig. 28, in a process of manufacturing the high-capacity battery, the cells 64 that have the cell housings 61 are placed in the high-capacity battery housing 65 filled with the electrolyte, and the electrolyte is injected into the high-capacity battery housing 65 through an injection opening 67. The electrolyte cavity 66 of the high-capacity battery is filled with the electrolyte, and the electrolyte passes through the through hole 6311 on the cap 631 to be in contact with the soluble sheet 632, and the soluble sheet 632 is gradually dissolved in the electrolyte. When the soluble sheet 632 is partially or completely dissolved, the through hole 6311 is in communication with the central through hole 621, such that the electrolyte in the high-capacity cell housing 65 and the electrolyte in the inner cavity of each cell 64 mutually mix, thus achieving the purpose that the electrolytes in the cells 64 are in the same electrolyte system.

In this embodiment, the cap 631 is made of flexible metal aluminum and fixed on the protrusion 62 through riveting, such that the central through hole 621 is sealed by the soluble sheet 632. This method has a desirable sealing effect and is relatively simple to operate. In some other embodiments, the protrusion 62 is provided with an outer edge, the outer edge is provided with an external thread, and the cap 631 is internally provided with an internal thread matching the external thread. The cap 631 and the protrusion 62 are fixed through the screwing, such that the central through hole 621 is sealed by the soluble sheet 632. Although this method has the desirable sealing effect, additional threads are required to be machined on the protrusion 62 and the cap 631, and the structure is complicated compared with a riveting method.

### Embodiment 17

As shown in Fig. 26, it is different from embodiment 16 in that, in order to prevent a soluble sheet 632 from being dissolved in an electrolyte inside a cell 64, a surface, facing an inner cavity of a cell 64, of the soluble sheet 632 is plated with a metal plating layer 6321 insoluble in the electrolyte. The metal plating layer 6321 is an aluminum plating layer, a copper plating layer or a nickel plating layer. The metal plating layer 6321 has desirable inertness and can protect the soluble sheet 632 from being dissolved in the electrolyte inside the cell. The metal plating layer 6321 has a thickness of 20 nm-80 nm. If the metal plating layer 6321 is too thin, it is prone to break during a plating process. If the metal plating layer 6321 is too thick, the metal plating layer 6321 is not prone to break after the soluble sheet 632 is dissolved, and a purpose that an electrolyte outside the cell reaches the interior of the cell cannot be achieved. It is proved by experiments that when the thickness of the metal plating layer 6321 is between 20 nm and 80 nm, the purpose of isolating the electrolyte inside the cell from being in contact with the soluble sheet 632 as the isolation layer can be satisfied, and the purpose that the metal plating layer 6321 of the soluble sheet 632 is broken when the soluble sheet 632 is dissolved in the electrolyte, the electrolyte in the high-capacity battery housing 65 and the electrolyte in the inner cavity of each cell 64 are mutually mixed, and the electrolytes inside the cells 64 are in the same electrolyte system can be further achieved.

In addition, in this embodiment, the cap 631 is made from flexible rubber material. During use, the cap 631 tightly wraps the protrusion 62 through its own elasticity, so as to hermetically fix the soluble sheet 632 on the protrusion 62.

### Embodiment 18

As shown in Fig. 26, a difference from Embodiment 17 is that a protective layer 6323 for protecting a metal plating layer 6321 is added in this embodiment on the basis of Embodiment 17. Since the thickness of the metal plating layer 6321 is only 20 nm-80 nm, and the metal plating layer 6321 is brittle, the metal plating layer 6321 is prone to break during a manufacturing process and a use process. Once the metal plating layer 6321 breaks, a soluble sheet 632 is in contact with the electrolyte inside the cell 64 and dissolves, and the soluble sheet 632 will lose a function of sealing a central through hole 621. Thus, in order to prevent the condition that the metal plating layer 6321 breaks when the soluble sheet 632 is not dissolved, and loses the function of isolating the soluble sheet 632 from the electrolyte in the inner cavity of the cell, the protective layer 6323 is coated on a surface of the metal plating layer 6321 in this embodiment. The protective layer 6323 is made by mixing two-component epoxy resin and through spraying with a diluent added to reduce viscosity. Alternatively, one or more of polytetrafluoroethylene, polyvinylidene fluoride, styrene butadiene rubber, hydroxypropyl methylcellulose, sodium carboxymethyl cellulose, carboxyethyl cellulose and polyvinyl alcohol and a solvent (such as N-methylpyrrolidone, tetrahydrofuran or alcohol) can be used for preparing a pulp to be coated. The protective layer 6323 can play a role in protecting the metal plating layer 6321 from accidental breakage during the manufacturing process or the use process. In addition, when the soluble sheet 632 is dissolved in the external electrolyte, both the metal plating layer 6321 and the protective layer 6323 without the carrier will break, the central through hole 621 is no longer sealed, and the through hole 6311 is in communication with the central through hole 621, such that the electrolyte in the high-capacity cell housing 65 flows into the inner cavity of the cell 64, and the electrolytes inside of the cells 64 are in the same electrolyte system. The thickness of the protective layer 6323 is preferably 0.1 µm-10 µm. If the protective layer 6323 has a too small thickness, the protective layer cannot protect the metal plating layer 6321. If the protective layer 6323 has a too large thickness, the protective layer cannot break along with breakage of the metal plating layer 6321, thus preventing the electrolyte outside the cell from entering the cell. Repeated experiments prove that when the thickness of the protective layer 6323 is between 0.1 µm-10 µm, the protective layer 6323 can protect the plating layer and further break along with breakage of the metal plating layer 6321.

In this embodiment, a manufacturing method of the protective layer 6323 is as follows:
Commercially available epoxy resin (brand HASUNCAST) Model: 129(A/B) is bought. The epoxy resin is a two-component epoxy resin with A/B glue. Component A is epoxy resin with epoxy groups, and component B is a curing agent. If only component A and component B are mixed, high viscosity is result, which is not conducive to formation of a protective film with a required thickness, and a diluent needs to be added. The diluent is composed of epoxy resin monomers.

Preparation method: Glue A is stirred without precipitation, component A and component B are mixed according to a mass ratio of 100:12, 20 g of diluent (model: 669, manufacturer: Changzhou Runxiang Chemical Co., Ltd.) is added, stirring is performed for 3 min-5 min, and after the component A, the component B and the diluent are mixed evenly, it is dripped to a surface of an aluminum-plated polymethyl methacrylate. Scraping is performed evenly on the surface of the metal plating layer 6321 with a wire rod, and the let it stand to solidify.

In some embodiments, in order to prevent the condition that impurities and fragments of the broken metal plating layer 6321 and the protective layer 6323 flow into the inner cavity of the cell, pollute the electrolyte and affect the cell performance, a filter membrane 6322 is arranged between the protective layer 6323 and the protrusion 62, or a filter membrane 6322 is arranged in the inner cavity of the cell housing. When the external electrolyte flows into the inner cavity of the cell through the through hole 6311 and the central through hole 621, the filter membrane 6322 prevents the fragments of the broken metal plating layer 6321 and the protective film from entering the cell. The filter membrane 6322 is made from one of polytetrafluoroethylene (PTFE), polyethylene (PE), polypropylene (PP) and filter paper, and the filter membrane 6322 has a thickness of 0.1 um to 30 um. In some other embodiments, the filter membrane 6322 can also be arranged in the central through hole 621, or at a surface, close to the interior of the housing, of the central through hole 621, through which the external fragments of the metal plating layer 6321 and the protective layer 6323 can be prevented from entering the electrolyte in the cell.

In some embodiments, in order to improve leakproofness of a connection between the soluble mechanism 63 and the protrusion 62, a sealing washer 633 cans be provided between the soluble mechanism 63 and the protrusion 62.

### Embodiment 19

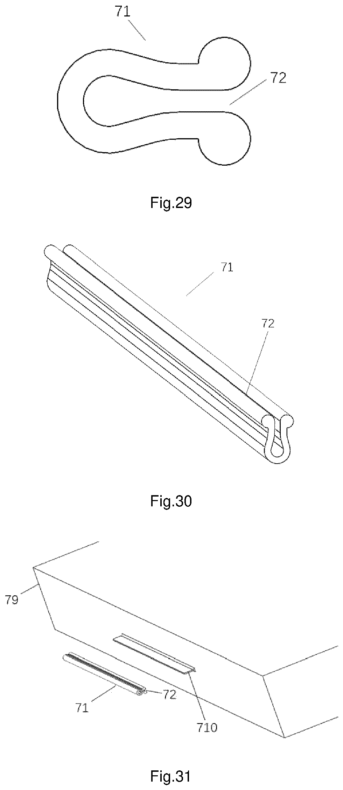

As shown in Figs. 29 to 31, this embodiment provides a cell housing. The cell housing 79 is suitable for a pouch cell. In this embodiment, an opening portion 710 of the pouch cell is a protrusion portion on the cell housing of the pouch cell, and the protrusion portion has an opening. When the opening is opened, a liquid outside the pouch cell can enter the pouch cell through the opening.

In this embodiment, the cell housing 79 is provided with a soluble mechanism. The soluble mechanism is a clamping member 71 that is internally hollowed and has an opening. The clamping member 71 has a slot 72, and the clamping member 71 has elasticity, such that the clamping member can apply a clamping force on the opening portion 710 of the pouch cell through its own elasticity. During use, the opening portion 710 is inserted into a hollowed portion in the clamping member 71 through the slot 72. The clamping member 71 has resilience, and the opening portion 710 is sealed by the resilience of the clamping member 71. At least a part of the clamping member 71 is made of a material soluble in an electrolyte, such as an upper half or a lower half of the slot 72, as long as the opening portion 710 is completely or partially opened after the clamping member is dissolved. In this embodiment, it is preferred that the clamping member 71 is completely soluble in the electrolyte, and is made of one of polymethyl methacrylate, silicone rubber polyvinyl chloride, polycarbonate or ABS plastic. These materials are soluble in the electrolyte when soaked in the electrolyte.

When the pouch cell with the clamping member 71 is placed in the electrolyte, the clamping member 71 is soaked in the electrolyte, the clamping member 71 is dissolved in the electrolyte, and releases clamping force on the opening portion 710, such that the opening portion 710 is opened, and an external electrolyte can enter the cell through the opening portion 710. The opening portion 710 is sealed by the soluble mechanism, and a simple structure is achieved. The opening portion 710 is opened when the soluble mechanism is soaked in the electrolyte, and automatically dissolved in the electrolyte, such that the opening portion is opened without external mechanical operation, and use is convenient.

### Embodiment 20

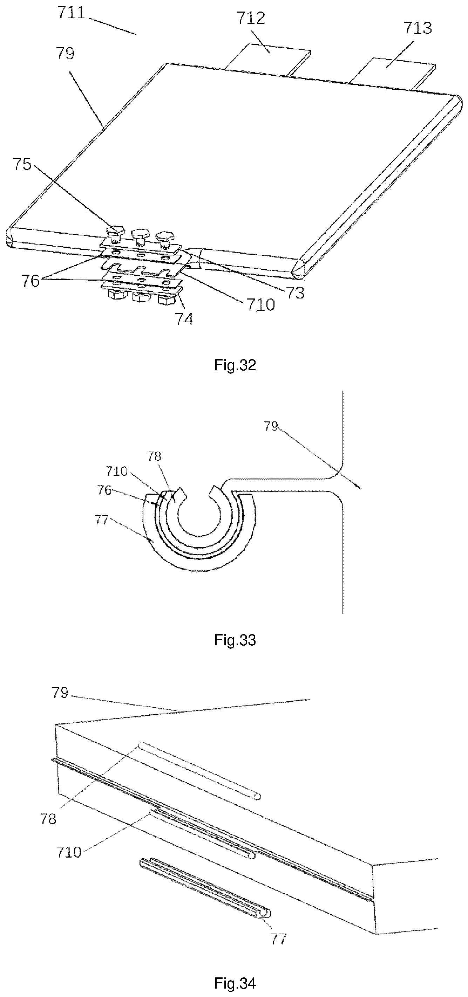

As shown in Fig. 32, this embodiment provides a cell housing. The cell housing 79 is suitable for a pouch cell 711. The cell housing 79 is provided with a soluble mechanism, the soluble mechanism includes a first clamping plate 73, a second clamping plate 74 and several bolts 75. The first clamping plate 73 and the second clamping plate 74 have several through holes, and during use, an opening portion 710 is placed between the first clamping plate 73 and the second clamping plate 74. The bolt 75 passes through the through hole to connect the first clamping plate 73 to the second clamping plate 74, so as to hermetically clamp the opening portion 710. A sealing gasket 76 can be arranged between the first clamping plate 73 and the opening portion 710 and/or between the second clamping plate 74 and the opening portion 710, preferably only one sealing gasket 76 is arranged for reducing a cost and achieving a sealing effect. A rivet is made of materials soluble in the electrolyte, such as one of polymethyl methacrylate, silicone rubber polyvinyl chloride, polycarbonate or ABS plastic. These materials are soluble in the electrolyte when soaked in the electrolyte. Thus, when the pouch cell 711 with the soluble mechanism is placed in the electrolyte, the soluble mechanism is soaked in the electrolyte, and the rivet is dissolved in the electrolyte and disappears, and releases clamping force on the opening portion 710, the opening portion 710 is opened, and the electrolyte outside the cell housing 79 can enter the cell housing 79 through the opening portion 710.

In some embodiments, the first clamping plate 73 and the second clamping plate 74 can also be made of materials soluble in the electrolyte. When the pouch cell 711 with the soluble mechanism is placed in the electrolyte, the opening portion 710 is soaked in the electrolyte, and the first clamping plate 73, the second clamping plate 74 and the rivet are all dissolved by the cell, and lose a sealing effect on the opening portion 710, the opening portion 710 is opened, and an external electrolyte can enter the pouch cell 711 through the opening portion 710. When the first clamping plate 73, the second clamping plate 74 and the rivet are all made of materials soluble in the electrolyte, the pouch cell 711 can be opened faster. Those skilled in the art will readily conceive that one or two or three of the first clamping plate 73, the second clamping plate 74 and the rivet can be made of materials soluble in the electrolyte according to different opening speeds of the opening required by the pouch cell 711.

The opening portion 710 is sealed by the soluble mechanism, and a simple structure is achieved. The opening portion 710 is opened when the soluble mechanism is soaked in the electrolyte, and automatically dissolved in the electrolyte, such that the opening portion is opened without external mechanical operation, and use is convenient.

It is clear that the first clamping plate 73 and the second clamping plate 74 can also be clamped by arranging concave-convex fitting portions or other fitting portions on the first clamping plate 73 and the second clamping plate 74 without using the bolts 75. In this way, one or two of the first clamping plate 73 and the second clamping plate 74 can be made of materials soluble in the electrolyte. The bolt 75 in the figure can also be replaced with the rivet that is more convenient for connection and fixation.

### Embodiment 21

As shown in Figs. 33 and 34, this embodiment provides a cell housing. The cell housing 79 is suitable for a pouch cell. The cell housing 79 is provided with a soluble mechanism, and the soluble mechanism includes an outer hoop 77 and an inner support 78. The outer hoop 77 is a hollowed tubular structure with a C-shaped cross section, and the inner support 78 is arranged in the inner hoop. An opening portion 710 is placed between the outer hoop 77 and the inner support 78, and a size and a sectional shape of the inner support 78 match an internal shape of the outer hoop 77. The opening portion 710 is pressed between the outer hoop 77 and the inner support 78, so as to seal the opening of the cell housing 79. In order to further improve leakproofness, a sealing gasket 76 can be arranged between the outer hoop 77 and the opening portion 710, or between the inner support 78 and the opening of the cell housing 79. Alternatively, sealing gaskets 76 can be arranged between the outer hoop 77 and the opening portion 710 and between the inner support 78 and the opening of the cell housing 79. Under the action of this soluble mechanism, the opening of the cell housing 79 is sealed, and external air and liquid cannot enter the pouch cell 711.

The outer hoop 77 of the soluble mechanism is made of materials soluble in the electrolyte, such as one of polymethyl methacrylate, silicone rubber polyvinyl chloride, polycarbonate or ABS plastic. These materials are soluble in the electrolyte when soaked in the electrolyte. Thus, when the pouch cell with the soluble mechanism is placed in the electrolyte, the soluble mechanism is soaked in the electrolyte, and the outer hoop 77 is dissolved in the electrolyte, and loses a sealing effect on the opening portion 710, the opening portion 710 is opened, and an external electrolyte enters the pouch cell.

In other embodiments, the outer hoop 77 and the inner support 78 are both made of materials soluble in the electrolyte, the opening portion 710 can be opened faster and more easily. Thus, when the pouch cell with the soluble mechanism is placed in the electrolyte, the soluble mechanism is soaked in the electrolyte, and both the outer hoop 77 and the inner support 78 are dissolved in the electrolyte, such that the sealing effect of the soluble mechanism on the pouch cell is lost, the opening portion 710 is opened, and the external electrolyte enters the pouch cell.

In some embodiments, the outer hoop 77, the inner support 78 and the sealing gasket 76 are all made of materials soluble in the electrolyte, such that when the soluble mechanism is soaked in the electrolyte, the entire soluble mechanism is completely dissolved. In some embodiments, the inner support 78 can be a C-shaped hollowed tube with the same shape as the outer hoop 77, or a solid round tube. Those skilled in the art will readily conceive that a sectional shape of the outer hoop 77 can be a C-shaped hollowed tube as well as a hollowed tubular structure with a square or trapezoidal section. The inner support 78 matches the hollowed shape of the outer hoop 77 and can provide supporting force to press the opening portion 710, and then seal the opening portion 710.

The opening portion 710 is sealed by the soluble mechanism, and a simple structure is achieved. The opening portion 710 is opened when the soluble mechanism is soaked in the electrolyte, and dissolved in the electrolyte, such that the opening portion is opened without external mechanical operation, and use is convenient.

### Embodiment 22

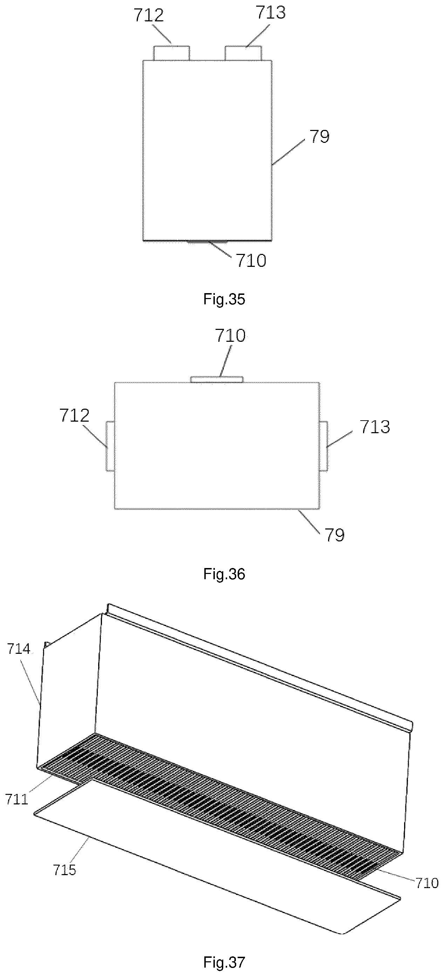

As shown in Fig. 35 and Fig. 36, this embodiment provides a pouch cell. The pouch cell includes a cell housing 79, a positive tab 712 and a negative tab 713. The cell housing 79 is provided with an opening portion 710, and the opening portion 710 is provided with the soluble mechanism described in Embodiments 20 to 21. When the positive tab 712 and the negative tab 713 of the pouch cell 711 are located on the same side of the cell housing 79, the opening portion 710 is located on the other side of the cell housing 79. For example, the opening portion 710 is located on a side opposite the side where the positive tab 712 and the negative tab 713 are located or adjacent to the side where the positive tab 712 and the negative tab 713 are located. When the positive tab 712 and the negative tab 713 of the pouch cell are located on opposite sides of the cell housing 79, the opening portion 710 is located on the side adjacent to the sides where the positive tab 712 and negative tab 713 are located.

When the pouch cell is placed in the electrolyte, the opening portion 710 is soaked in the electrolyte. Since the opening portion 710 is sealed by the soluble mechanism, and the soluble mechanism can be partially or completely dissolved in the electrolyte and disappear, and lose a sealing effect on the opening portion 710, the opening portion 710 is opened, and an external electrolyte can enter the pouch cell through the opening portion 710.

The opening portion 710 is sealed by the soluble mechanism, and a simple structure is achieved. The opening portion 710 is opened when the soluble mechanism is soaked in the electrolyte, and dissolved in the electrolyte, such that the opening portion is opened without external mechanical operation, and use is convenient.

### Embodiment 23

As shown in Fig. 37, this embodiment provides a high-capacity battery. The high-capacity battery includes an outer housing 714, a cover plate 715 and a plurality of pouch cells 711 described in the previous embodiment 22. The plurality of pouch cells 711 are connected in parallel and accommodated in a high-capacity cell housing 79 to form the high-capacity battery. The opening portion 710 is provided with the soluble mechanism described in Embodiments 20 to 21, and the cover plate 715 seals the outer housing 714, and the outer housing 714 is filled with an electrolyte. The opening portion 710 is soaked in the electrolyte. Since the soluble mechanism can be partially or completely dissolved in the electrolyte, when the soluble mechanism is dissolved and disappears, the opening portion 710 is opened, and an electrolyte in the outer housing 714 enters the pouch cell 711 through the opening portion 710. Thus, all the pouch cells 711 are in a uniform electrolyte system, and a poor cycle performance caused by performance differences of the pouch cells 711 due to the variation of electrolyte consumption during operation of the high-capacity battery is solved or eliminated.

The opening portion 710 is sealed by the soluble mechanism, and a simple structure is achieved. The opening portion 710 is opened when the soluble mechanism is soaked in the electrolyte, and dissolved in the electrolyte, such that the opening portion is opened without external mechanical operation, and use is convenient.

### Embodiment 24

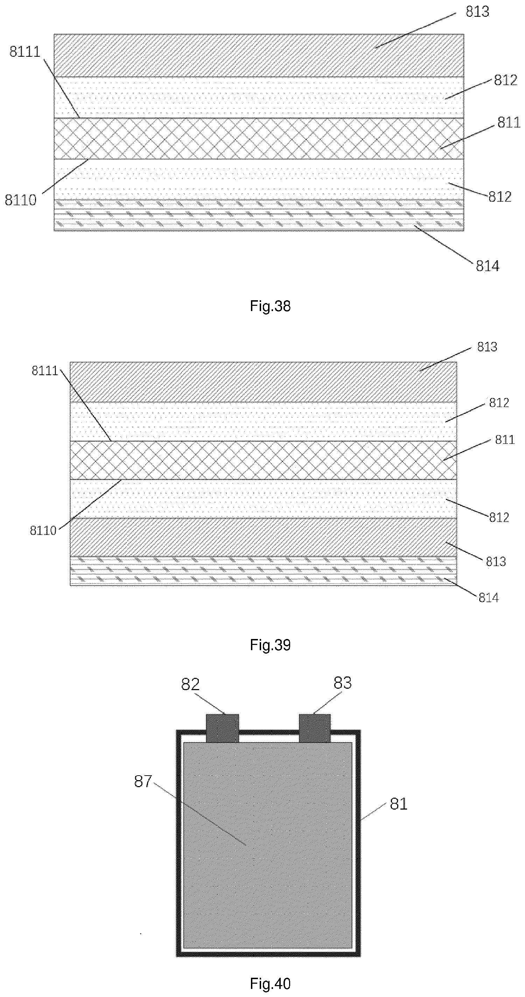

As shown in Fig. 38, this embodiment provides a cell housing. The cell housing is the soluble mechanism. The cell housing 81 includes a main layer 811, the main layer 811 has an inner surface 8110 and an outer surface 8111, the inner surface 8110 is a surface facing an inner cavity of the cell housing, and the outer surface 8111 is a surface away from the inner cavity of the cell housing, that is, the surface facing an exterior of the housing. A binding layer 812 and a heat sealing layer 814 are sequentially arranged on the inner surface 8110 of the main layer 811. The binding layer 812 is a waterproof binding layer 812. A binder used for the binding layer 812 is polyurethane or thermoplastic polyurethane elastomer (TPU). The binder can bind the heat sealing layer 814 on the inner surface 8110 of the main layer 811. The heat sealing layer 814 is a composite material layer made of polypropylene (CPP) and nylon PA6 through hot melting. The heat sealing layer 814 has a thickness of 10 µm-50 µm. A binding layer 812 and a protective layer 813 are sequentially arranged on the outer surface 8111 of the main layer 811. The binding layer 812 binds the protective layer 813 on the main layer 811. The binding layer 812 adopts a binder such as polyurethane or thermoplastic polyurethane elastomer (TPU), and the protective layer 813 is nylon PA6. The protective layer 813 has a thickness of 10 µm-50 µm preferably.

In this embodiment, the main layer 811 is porous aluminum foil, and the porous aluminum foil can have round or rectangular holes, preferably round holes. The round hole has a diameter of 0.5 mm-1 mm preferably, and a thickness of 40 µm-100 µm preferably, such that the electrolyte can smoothly pass through the porous aluminum foil.

Experiments prove that polyurethane, thermoplastic polyurethane elastomer, polypropylene and nylon PA6 are all soluble in a conventional electrolyte, and dissolution times of the materials are different. Polypropylene (CPP) is insoluble in the electrolyte.

A composition and a preparation method of the binder in this embodiment are as follows:
The components of the binder at least include (per mass percentage): 10% of polyurethane or TPU, 1.5% of curing agent, 0.5% of tackifying resin, 0.2% of hydrolysis inhibitor, 58.8% of cyclohexane and 29% of butanone. And cyclohexane and butanone are used as solvents. The curing agent is tert-butyl peroxyhexane or an imidazole compound, the tackifying resin is phenolic resin or modified rosin resin, and the hydrolysis inhibitor is carbodiimide, oxazoline or an epoxy compound.

A preparation method of the binder is as follows:
First, polyurethane or TPU is heated at 40°C for 24 hours, then the tackifying resin, the hydrolysis inhibitor, a mixed solvent (cyclohexane and/or butanone) and the curing agent are added in turn while stirring, and a total solid content of the binder is 10%. Then, filtering is performed with a polypropylene (PP) filter element to remove insoluble substances for later use.

A preparation method of the heat sealing layer 814 is as follows: CPP and PA6 are evenly mixed according to a mass ratio of 2:1, heating is performed to 250°C, and stirring is performed while heating. After stirring evenly, melted plastic is camped between two rollers, and rolled into a film, the film is stretched and made firm with a thickness of 10 µm-30 µm, and cooling is performed at a room temperature. Since CPP is insoluble in the electrolyte, PA6 is soluble in the electrolyte, and a speed of dissolving in the electrolyte of the heat sealing layer 814 formed through hot melting is slower than a speed of dissolving in the electrolyte of PA6. The dissolution time of the soluble layer can be adjusted by adjusting the ratio of CPP and PA6.

In this embodiment, the mass ratio of CPP to nylon PA6 in the heat sealing layer 814 is not unique. Since CPP is insoluble in the electrolyte, nylon PA5 is soluble in the electrolyte. The purpose of adding CPP is to adjust the dissolution time of nylon PA6 in the electrolyte, such that the ratio of CPP to nylon PA6 can be adjusted according to the required time of dissolving in the electrolyte.

A manufacturing method of the cell housing is as follows: 1. Drying the binder: the prepared binder is dried in a vacuum drying oven at 60°C-80°C for 24 hours under the nitrogen environment. 2. Degreasing the porous aluminum foil: at a room temperature, the porous aluminum foil is soaked in a degreasing solvent for 2 hours for being degreased. The degreasing solvent is one of acetone, butanone and trichloroethylene. 3. Binding the porous aluminum foil layer and the protective layer 813: the degreased aluminum foil layer is compounded with the dried binder, and the binding layer 812 is bonded in the outer surface 8111 of the porous aluminum foil layer. After compounding, curing is performed, and the protective layer 813 is bonded on the outer surface 8111 of the porous aluminum foil through roll coating. 4. Binding the porous aluminum foil layer and the heat sealing layer 814: the binder is coated on the inner surface 8110 of heat sealing layer 814, and a thickness of the coated binder is controlled to be 3 µm. After being dried in an oven, the surface, coated with the binder, of heat sealing layer 814 is hot-pressed and compounded with the aluminum foil, and bonded on the inner surface 8110 of the porous aluminum foil. An oven temperature is 85 degrees Celsius and a dry binder coating rate is 2.4 g/m². 5. Forming the cell housing: the compounded cell housing is put into a curing chamber for being cured for 5 days at a curing temperature of 40°C.

The materials of the heat sealing layer 814 and the protective layer 813 are both soluble in the conventional electrolyte. Thus, when the cell housing 81 is placed in the electrolyte for a period of time, only the main layer 811 is left to wrap around the electrode assembly 87 after the heat sealing layer 814 and the protective layer 813 are dissolved in the electrolyte.

Since the protective layer 813 and the heat sealing layer 814 are small in thickness and low in hardness, the main layer 811 can play a supporting role, such that the protective layer 813 and the heat sealing layer 814 can wrap around the electrode assembly 87 completely.

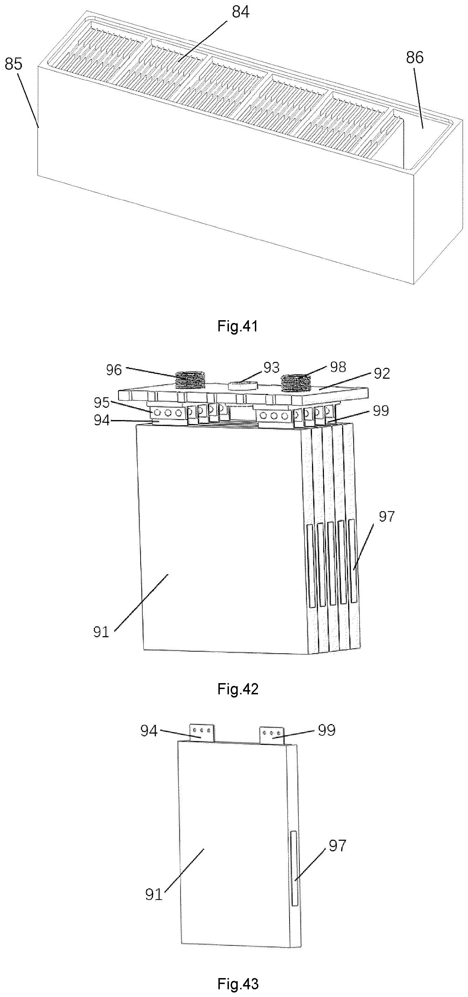

As shown in Fig. 41, a plurality of cells 84 that have the cell housings of this embodiment are placed in the outer housing 85, an electrolyte cavity 86 of a high-capacity battery is filled with the electrolyte, and the protective layer 813 and the heat sealing layer 814 of the cell 84 are gradually dissolved in the electrolyte of the high-capacity battery. When both the protective layer 813 and the heat sealing layer 814 are dissolved and disappear, only the main layer 811 remains in the cell housing of the cell 84, the electrolyte can penetrate the porous aluminum foil since the main layer 811 is the porous aluminum foil, such that the electrode assemblies 87 of all the cells 84 are soaked in the electrolyte cavity of the high-capacity battery and in the same electrolyte system. The consistency difference of the electrolyte of the cells 84 does not occur, thereby improving the performance of the high-capacity battery.

### Embodiment 25

As shown in Fig. 39, this embodiment is different from Embodiment 24 in that a binding layer 812, a protective layer 813 and a heat sealing layer 814 are sequentially arranged on an inner surface 8110 of a main layer 811 of this embodiment. That is, the protective layer 813 is added between the binding layer 812 and the heat sealing layer 814 of Embodiment 24.

In this embodiment, the main layer 811 is porous aluminum foil, and the porous aluminum foil can have round or rectangular holes, preferably round holes. The round hole has a diameter of 0.5 mm preferably, and a thickness of 40 µm preferably, such that the electrolyte can pass through the porous aluminum foil. A surface, facing an inner cavity of the housing, of the main layer 811 is the inner surface 8110, and a surface, away from the inner cavity of the housing, of the main layer is an outer surface 8111. The binding layer 812, the protective layer 813 and the heat sealing layer 814 are sequentially arranged on the inner surface 8110 of the main layer 811. The binding layer 812 is a waterproof binding layer 812, and made from a binder such as polyurethane or thermoplastic polyurethane elastomer (TPU), and can bind the heat sealing layer 814 on the inner surface 8110 of the main layer 811. The heat sealing layer 814 is a composite material layer made of polypropylene (CPP) and nylon PA6 through hot melting. The heat sealing layer 814 has a thickness of 10 µm. A binding layer 812 and a protective layer 813 are sequentially arranged on the outer surface 8111 of the main layer 811. The binding layer 812 binds the protective layer 813 on the main layer 811. The binding layer 812 adopts a material such as polyurethane or thermoplastic polyurethane elastomer (TPU), and the protective layer 813 is nylon PA6. The protective layer 813 has a thickness of 10 µm-50 µm preferably.

In this embodiment, a composition and a preparation method of the binder are the same as those of the binder in Embodiment 24.

A manufacturing method of the cell housing is as follows: 1. Drying the binder: the prepared binder is dried in a vacuum drying oven at 60°C-80°C for 24 hours under nitrogen condition. 2. Degreased the porous aluminum foil: at a room temperature, the aluminum foil is soaked in a degreasing solvent for 2 hours for being degreased. The degreasing solvent is one of acetone, butanone and trichloroethylene. 3. Binding the porous aluminum foil layer and the protective layer 813: the dried binder is compounded on the outer surface 8111 of the degreased aluminum foil layer. After compounding, curing is performed, and the protective layer 813 is bonded on the outer surface 8111 of the aluminum foil through roll coating. 4. Coating the heat sealing layer 814 on the protective layer 813: CPP and PA6 particles are evenly mixed in a mass ratio of 2:1, heating is performed to 250 degrees Celsius, stirring is performed while heating, and then after evenly stirred, a mixture that is still heated is coated on the protective layer 813 with a thickness of 10 µm-30 µm through roll coating, and cooling is performed at a room temperature. 5. Binding the porous aluminum foil layer on the protective layer 813 coated with the heat sealing layer 814: the dried binder is compounded on the inner surface 8110 of the degreased aluminum foil layer, curing is performed after compounding, and a surface, not coated with the heat sealing layer 814, of the protective layer 813 in step 4 is bonded on the inner surface 8110 of the aluminum foil layer through roll coating. 6. Forming the cell housing: the compounded cell housing is put into a curing chamber for being cured for 5 days at a curing temperature of 40 degrees Celsius.

The heat sealing layer 814 and the protective layer 813 are both soluble in the conventional electrolyte. Thus, when the cell housing 81 is placed in the electrolyte for a period of time, the housing can be gradually dissolved in the electrolyte. The purpose of adding the protective layer 813 in this embodiment is to strengthen protection of the cell housing. Since the heat sealing layer 814 is thin, the protective layer supports the main layer 811 to prevent the cell housing from being damaged by external force, and prolong time of dissolution of the cell housing in the electrolyte.

As shown in Fig. 41, a plurality of cells 84 that have the cell housings of this embodiment are placed in the outer housing 85, an electrolyte cavity of a high-capacity battery is filled with the electrolyte, and the protective layer 813 and the heat sealing layer 814 of the housing of the cell 84 are gradually dissolved in the electrolyte of the high-capacity battery. When both the protective layer 813 and the heat sealing layer 814 are dissolved and disappear, only the main layer 811 remains in the cell housing of the cell 84, the electrolyte in the electrolyte cavity can pass through the porous aluminum foil since the main layer 811 is the porous aluminum foil, such that the electrode assemblies 87 of all the cells 84 are soaked in the electrolyte cavity of the high-capacity battery and in the same electrolyte system. The consistency difference of the electrolytes of the cells 84 does not occur, thereby improving the performance of the high-capacity battery.

### Embodiment 26

As shown in Fig. 40, this embodiment provides a cell. The cell 84 is a pouch cell, and mainly includes an electrode assembly 87, a cell positive electrode 82, a cell negative electrode 83, and a cell housing 81 as described in Embodiment 24 or Embodiment 25. The cell housing 81 contains an electrolyte. The cell 84 with the cell housing of this embodiment can be dissolved in the electrolyte automatically when placed in the electrolyte cavity of a high-capacity battery without mechanical operation, and the housing has a simple structure and high versatility.

A plurality of cells of this embodiment are placed in the outer housing 85, an electrolyte cavity 86 of a high-capacity battery is filled with the electrolyte, and the protective layer 813 and the heat sealing layer 814 of the housing of the cell 84 are gradually dissolved in the electrolyte of the high-capacity battery. When both the protective layer 813 and the heat sealing layer 814 are dissolved and disappear, only the main layer 811 remains in the cell housing of the cell 84, since the main layer 811 is the porous aluminum foil, the electrode assemblies 87 of all the cells 84 are soaked in the electrolyte cavity of the high-capacity battery and in the same electrolyte system. The consistency difference of the electrolytes of the cells 84 does not occur, thereby improving the performance of the high-capacity battery.

### Embodiment 27

As shown in Figs. 42-44, this embodiment provides a plastic-housing cell. The plastic-housing cell includes a cell housing 910, a plurality of pouch cells 91, an upper cover assembly 92, a positive pole 96, a negative pole 98, an explosion relief valve 93 and a conductive connection piece 95. The cell housing 910 contains the plurality of pouch cells 91, and the pouch cell 91 is provided with an opening 917. The positive tab 94 and negative tab 95 of the pouch cell 91 are connected with the positive pole 96 and the negative pole 98 of the upper cover assembly 92 through the conductive connection piece 95 respectively. The upper cover assembly 92 seals the cell housing 910, and an upper side surface of the cell housing 910 has a housing opening 911. A soluble mechanism 913 is arranged at the housing opening 911. In this embodiment, the soluble mechanism 913 is a polymethyl methacrylate sheet with a thickness of 2 mm, and the polymethyl methacrylate sheet can cover the housing opening and be hermetically bound to the opening.

Before manufacturing the plastic-housing cell, the pouch cells 91 are pre-charged and subjected to capacity grading, and the pouch cells 91 with a desirable yield are selected. An aluminum-plastic film of the pouch cell 91 is perforated, and the pouch cells 91 are connected in parallel and sealed in the plastic housing to manufacture the plastic-housing cell. When the cell is in a natural state, an inner cavity of the cell housing 910 is hermetically isolated from an exterior. When the plastic-housing cell is placed in an external electrolyte or the housing opening 911 is connected with an electrolyte pipe, the electrolyte flows into the cell housing through the opening after the polymethyl methacrylate sheet is dissolved in the electrolyte. Since an opening is provided on the aluminum-plastic film of the pouch cell 91, the electrolyte further flows into the pouch cell 91, such that the plurality of pouch cells 91 are in the same electrolyte system.

In another embodiment, the soluble mechanism 913 includes a polyethylene film with a thickness of 0.1 mm and a polymethyl methacrylate sheet with a thickness of 2 mm. The polyethylene film can cover the housing opening 911, the polyethylene film is bound on a surface, facing the housing opening 911, of the polymethyl methacrylate sheet, and the soluble mechanism 913 seals the housing opening 911.

When that cell is in a natural state, the inner cavity of the cell housing 910 is hermetically isolated from the exterior. When the plastic-housing cell 916 is placed in the external electrolyte, after the polymethyl methacrylate sheet is dissolved in an external electrolyte, the polypropylene film falls off from the opening under the action of the fluid, and the housing opening 911 is no longer sealed, and the electrolyte flows into the cell housing through the opening. Since the opening is provided on the aluminum-plastic film of the pouch cell 91, the electrolyte further flows into the pouch cell 91, such that the plurality of pouch cells 91 are in the same electrolyte system.

### Embodiment 28

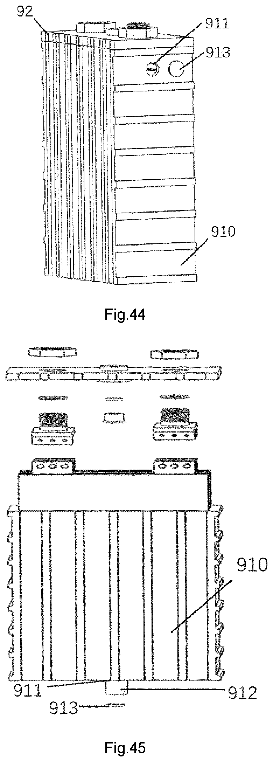

As shown in Fig. 45, this embodiment provides a plastic-housing cell. Different from the Embodiment 27, the cell housing 910 is provided with a housing opening 911, and the housing opening 911 is provided with a butt joint pipe 912. The butt joint pipe 912 can be bound and fixed to the housing opening 911, and the butt joint pipe 912 is in communication with an inner cavity of the cell housing 910. In this embodiment, the soluble mechanism 913 is a polymethyl methacrylate sheet with a thickness of 2.5 mm, and the polymethyl methacrylate sheet is fixed and bound in the butt joint pipe 912, and seals the housing opening 911.

In an embodiment, the soluble mechanism 913 includes a polyethylene film with a thickness of 0.1 mm and a polymethyl methacrylate sheet with a thickness of 2 mm. The polyethylene film can cover the housing opening 911, the polyethylene film is bound on a surface of the polymethyl methacrylate sheet. The butt joint pipe 912 is bound to the housing opening 911, and the butt joint pipe 912 is in communication with the inner cavity of the cell housing 910. The soluble mechanism 913 is fixedly connected on the butt joint pipe 912, and a surface, on which the polyethylene film is bound, of the polymethyl methacrylate sheet faces an interior of the housing. The soluble mechanism 913 mounted on the butt joint pipe 912 seals the housing opening 911.

### Embodiment 29

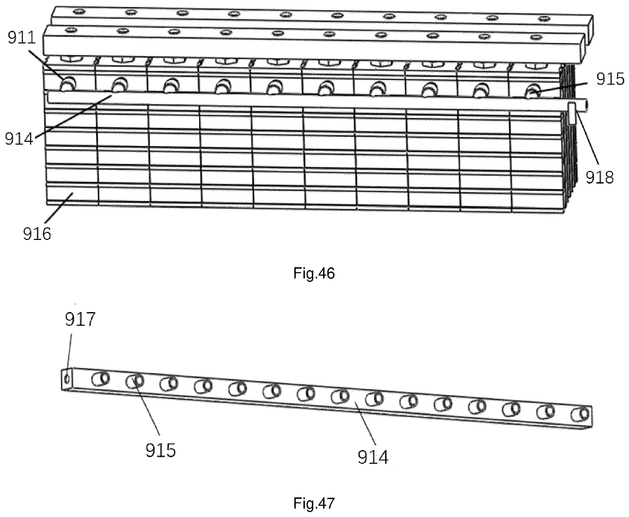

As shown in Figs. 46 and 47, this embodiment provides a high-capacity battery. The high-capacity battery includes a plurality of plastic-housing cells 916 and a multi-branch liquid storage pipe. The multi-branch liquid storage pipe includes a main pipe 914 and a plurality of branch pipes 915, an inner cavity of the main pipe 914 is a liquid storage cavity 917 for containing an electrolyte, the branch pipes 915 are connected with openings of the plastic-housing cells 916 in one-to-one correspondence, and a soluble mechanism 913 is arranged on the housing opening 911. In this embodiment, the soluble mechanism 913 is a polymethyl methacrylate sheet with a thickness of 2 mm, and is hermetically bound to the housing opening 911. When the electrolyte is injected into the multi-branch liquid storage pipe through an injection and gas extraction portion 918, the electrolyte enters each plastic-housing cell 916 through the main pipe 914 and the branch pipes 915. Since the polymethyl methacrylate soluble sheet is arranged at the opening of the plastic-housing cell 916, the electrolyte in the pipe circulates in the plastic-housing cell 916 after the soluble sheet is dissolved in the electrolyte and disappears, and the electrolyte enters the plastic-housing cell 916 and then enters an interior of each pouch cell 91. Since the liquid storage cavity contains the electrolyte, the plastic-housing cell 916 containing the pouch cells 91 and the liquid storage cavity are both in the common electrolyte system. During the use of the battery, the performance difference of the cells caused by inconsistent electrolyte consumption is reduced, and the high-capacity battery has desirable uniformity.

Since the pouch cells 91 in the plastic-housing cell 916 are subjected to formation, capacity grading, and consistency selection, and then packaged into the cell housing, the entire high-capacity battery has desirable consistency.

## Claims

1. A cell housing, having a soluble mechanism, wherein the soluble mechanism is at least partially soluble in an electrolyte.

2. The cell housing according to claim 1, being provided with a housing opening, wherein the soluble mechanism seals the housing opening, the soluble mechanism comprises a soluble base layer, and after the soluble base layer is in contact with the electrolyte, the soluble base layer is dissolved, the housing opening is opened and an inner cavity of the cell housing is in communication with an exterior.

3. The cell housing according to claim 2, wherein the soluble base layer is made from at least one of ethylene propylene rubber (PS), polymethyl methacrylate (PMMA), thermoplastic polyurethane elastomer rubber (TPU), styrene methyl dimethacrylate copolymer (SMMA), acrylonitrile butadiene styrene copolymer (ABS), acrylate rubber-styrene-acrylonitrile copolymer (ASA), polyformaldehyde, polydodecanamide, polyamide, imide PAI, styrene-butadiene copolymer and polystyrene, preferably polydodecanamide and polyamide.

4. The cell housing according to claim 2, wherein the soluble mechanism further comprises an isolation layer, the isolation layer is attached to an inner surface of the soluble base layer, and the inner surface of the soluble base layer is a surface opposite the inner cavity of the cell housing.

5. The cell housing according to claim 4, wherein the isolation layer is a film insoluble in the electrolyte.

6. The cell housing according to claim 4, wherein the isolation layer is an isolation coating coated on the inner surface of the soluble base layer, and the isolation coating comprises a binder and a solvent; the binder is at least one of polytetrafluoroethylene, polyvinylidene fluoride, styrene butadiene rubber, hydroxypropyl methylcellulose, sodium carboxymethyl cellulose, carboxyethyl cellulose and polyvinyl alcohol, and the solvent is at least one of N-methylpyrrolidone, N,N-dimethylformamide, N,N-diethylformamide, dimethyl sulfoxide, tetrahydrofuran, water and alcohol; and the isolation layer binds the soluble base layer to the housing opening.

7. The cell housing according to any one of claims 2-6, wherein a fixing portion is arranged outside the housing opening to fix the soluble mechanism, the fixing portion is provided with a through passage that is in communication with the inner cavity of the cell housing, and the soluble mechanism is arranged in the fixing portion to seal the through passage.

8. The cell housing according to claim 7, wherein a bearing table is arranged in the through passage to place the soluble mechanism.

9. The cell housing according to claim 1, wherein the cell housing is the soluble mechanism, and the cell housing is made from at least one of ethylene propylene rubber (PS), polymethyl methacrylate (PMMA), thermoplastic polyurethane elastomer rubber (TPU), styrene methyl dimethacrylate copolymer (SMMA), acrylonitrile butadiene styrene copolymer (ABS), acrylate rubber-styrene-acrylonitrile copolymer (ASA), polyformaldehyde, polydodecanamide, polyamide, imide PAI, and styrene-butadiene copolymer.

10. The cell housing according to claim 1, wherein the soluble mechanism comprises an isolation assembly and a soluble assembly; at least one housing opening is provided on the cell housing, the isolation assembly and the soluble assembly are sequentially provided at the housing opening in a direction away from an inner cavity of the cell housing, and the soluble assembly presses the isolation assembly to jointly seal the housing opening; and when the soluble assembly is in contact with the electrolyte outside the cell housing, the isolation assembly is opened due to dissolution of the soluble mechanism, and an interior of the cell housing is in communication with an exterior.

11. The cell housing according to claim 10, wherein the isolation assembly is a sphere or a cone.

12. The cell housing according to claim 1, wherein the soluble mechanism comprises an isolation assembly, a soluble assembly and an ejection assembly, at least one housing opening is provided on the cell housing, and the isolation assembly, the soluble assembly and the ejection assembly are sequentially arranged at the housing opening in a direction away from the cell housing; the isolation assembly and the soluble assembly jointly seal the housing opening, and the soluble assembly maintains a pressed state of the ejection assembly; and when the soluble assembly is in contact with the electrolyte, the ejection assembly is released from the pressed state due to dissolution of the soluble assembly, and ejects the isolation assembly, and an interior of the cell housing is in communication with an exterior.

13. The cell housing according to claim 12, wherein the ejection assembly comprises a fixing portion and an elastic component, the elastic component is a spring, and the fixing portion and the soluble assembly make the spring in a compressed state.

14. The cell housing according to claim 1, being provided with a mounting portion, wherein a through mounting hole is provided on the mounting portion, and the soluble mechanism comprises a base, a connection pipe that protrudes from the base, and a soluble assembly; a through hole in communication with the connection pipe is provided on the base, the soluble assembly is arranged in the connection pipe, the soluble assembly seals the connection pipe, the connection pipe passes through the mounting hole from an interior of the cell housing to an exterior, and the base is hermetically mounted on the mounting portion; and when the electrolyte flows through the soluble assembly from the exterior of the cell housing to the interior, the soluble mechanism is dissolved and opened, and the electrolyte enters the interior of the cell housing.

15. The cell housing according to claim 14, wherein the mounting hole is a stepped hole; the stepped hole comprises a first hole and a second hole that are sequentially provided from the interior of the cell housing to the exterior, and a diameter of the first hole is greater than a diameter of the second hole; and the base is inserted into the first hole, and the connection pipe is inserted into the second hole.

16. The cell housing according to claim 14, wherein the soluble mechanism further comprises a nut, a sealing gasket and a sealing ring; an external thread matching the nut is provided on the connection pipe, and the nut is arranged at the exterior of the cell housing and connected with the external thread of the connection pipe; and the sealing gasket is arranged between the mounting portion and the nut, and the sealing ring is arranged between the base and the mounting portion.

17. The cell housing according to claim 14, wherein the soluble assembly comprises a soluble sheet soluble in the electrolyte and a protective film insoluble in the electrolyte, and the protective film is arranged at a surface, facing the interior of the cell housing, of the soluble sheet and hermetically isolates the cell housing.

18. The cell housing according to claim 17, wherein the soluble mechanism further comprises a pressing member, the pressing member presses and fixes the soluble assembly, and the pressing member is internally hollowed, in communication with the connection pipe and closely connected with the connection pipe.

19. The cell housing according to claim 1, wherein a housing opening is provided on a housing body of the cell housing; the soluble mechanism is arranged at an outer surface of the housing body and covers the housing opening, and the soluble mechanism comprises a soluble layer and an isolation layer; and the soluble layer is soluble in the electrolyte, the isolation layer is a metal plating layer at an inner surface of the soluble layer, and the inner surface of the soluble layer is a surface, facing an inner cavity of the cell housing, of the soluble layer.

20. The cell housing according to claim 19, wherein the metal plating layer is an aluminum plating layer or a copper plating layer, and the metal plating layer has a thickness of 200 angstroms-800 angstroms; a metal ring is arranged between the housing body and the soluble mechanism, and a projection of an intra-ring area of the metal ring covers an area of the housing opening; and a hot melt binding layer is arranged between the metal ring and each of the soluble mechanism and the housing body.

21. The cell housing according to claim 20, wherein a single-layer filter membrane or multi-layer filter membranes is/are arranged between the housing body and the soluble mechanism, the filter membrane covers the housing opening, and after the soluble mechanism is dissolved, the electrolyte outside the cell housing enters the inner cavity of the cell housing through the filter membrane.

22. The cell housing according to claim 21, wherein an annular binding layer is arranged between the filter membrane and each of the housing body and the soluble mechanism, the annular binding layer binds and fixes the filter membrane with the housing body and the soluble mechanism, and a projection of an intra-ring area of the annular binding layer covers the area of the housing opening.

23. The cell housing according to claim 1, wherein a protrusion that has a central through hole is provided on the cell housing, and the soluble mechanism comprises a cap and a soluble sheet; and the cap is provided with a through hole and fixed on the protrusion, the soluble sheet is arranged between the cap and the protrusion and seals the central through hole, and the soluble sheet is soluble in the electrolyte.

24. The cell housing according to claim 23, wherein a surface, facing an inner cavity of the cell housing, of the soluble sheet is coated with a metal plating layer insoluble in the electrolyte, and a surface of the metal plating layer is coated with a protective layer.

25. The cell housing according to claim 24, further comprising a filter membrane, wherein the filter membrane is arranged in the central through hole and located at a side, close to an interior of the cell housing, of the protective layer.

26. The cell housing according to claim 1, wherein the soluble mechanism is clamped in an opening portion of the cell housing, and at least a part of the soluble mechanism is soluble in the electrolyte, such that the opening portion of the cell housing is opened after a cell is soaked in the electrolyte.

27. The cell housing according to claim 26, wherein the soluble mechanism is a clamping member, the clamping member is internally hollowed and provided with a slot, and the clamping member applies a clamping force on the opening portion of the cell housing through its own elastic restoring force.

28. The cell housing according to claim 26, wherein the soluble mechanism comprises a first clamping plate and a second clamping plate, and the first clamping plate and the second clamping plate jointly apply the clamping force on the opening portion of the cell housing so as to achieve sealing.

29. The cell housing according to claim 28, wherein the first clamping plate and the second clamping plate are fixed through riveting or bolting, and a rivet or a bolt is made from a material soluble in the electrolyte.

30. The cell housing according to claim 26, wherein the soluble mechanism comprises an outer hoop and an inner support, both the outer hoop and the inner support are hollowed tubular structures with C-shaped cross sections, the inner support is arranged in the outer hoop, and the inner support and the outer hoop jointly clamp the opening portion of a pouch cell housing.

31. The cell housing according to claim 1, being configured to contain an electrode assembly and the electrolyte, wherein the cell housing is the soluble mechanism, the soluble mechanism comprises a main layer, and the main layer comprises an outer surface and an inner surface; a binding layer and a heat sealing layer are sequentially arranged on the inner surface in a direction away from the main layer, a binding layer and a protective layer are sequentially arranged on the outer surface in a direction away from the main layer, the inner surface is a surface facing an inner cavity of the cell housing, and the outer surface is a surface away from the inner cavity of the cell housing; and the main layer is a porous metal foil layer and configured to communicate electrolytes of an interior and an exterior of the cell housing, and the binding layer and the protective layer are soluble in the electrolyte.

32. The cell housing according to claim 31, wherein a protective layer is further provided between the binding layer and the heat sealing layer, and the protective layer is soluble in the electrolyte.

33. The cell housing according to claim 31, wherein the main layer is a single-layer porous metal foil or multi-layer porous metal foils, the porous metal foil has a round hole that has a diameter of 0.5 mm-1 mm, the protective layer is a nylon PA6 protective layer, and the protective layer has a thickness of 10 µm-50 µm; the binding layer is a waterproof binding layer, the binding layer is a polyurethane layer, and the binding layer is configured to bind the main layer and the protective layer/the heat sealing layer; and the heat sealing layer is a composite layer, and the composite layer is made through hot melt mixing of polypropylene (CPP) and nylon PA6.

34. A cell, comprising the cell housing according to any one of claims 1-33.

35. The cell according to claim 34, wherein the cell housing is sealed through an upper cover assembly, and at least one pouch cell is arranged in the cell housing; an opening is provided on a packaging bag of the pouch cell, and a positive pole, a negative pole and an explosion relief valve are arranged on the upper cover assembly; and a positive tab and a negative tab of the pouch cell are electrically connected with the positive pole and the negative pole of the upper cover assembly through conductive connection pieces respectively.

36. A high-capacity battery, comprising at least two cells according to claim 34 and a multi-branch liquid storage pipe, wherein the multi-branch liquid storage pipe comprises a main pipe and at least two branch pipes, a liquid storage cavity configured to contain the electrolyte is provided in the main pipe, and the branch pipes are connected with the housing openings in one-to-one correspondence.

37. A high-capacity battery, comprising an outer housing and a plurality of cells according to claim 34, wherein an electrolyte cavity is provided in the outer housing, the electrolyte cavity is filled with the electrolyte, and the cells are contained in the electrolyte cavity.
